# EUROPEAN PATENT APPLICATION

(11) **EP 3 203 766 A1**
(43) Date of publication of application: **09.08.2017**
(21) Application number: 15854223.3
(22) Date of filing: 21.05.2015
(51) Int. Cl.: H04W 12/00

(54) **DISCOVERY METHOD AND APPARATUS BETWEEN DEVICES**

(30) Priority: 31.10.2014 CN 201410616545
(71) Applicant: Huawei Technologies Co., Ltd., Longgang District Shenzhen, Guangdong 518129 (CN)
(72) Inventor: PANG, Gaokun, Shenzhen Guangdong 518129 (CN); FANG, Ping, Shenzhen Guangdong 518129 (CN); CHEN, Ji, Shenzhen Guangdong 518129 (CN)
(74) Representative: Körber, Martin Hans
(86) International application number: PCT/CN2015/079506
(87) International publication number: WO 2016/065892

(57) **Abstract**

Embodiments of the present invention disclose an inter-device discovery method and apparatus, relate to the field of communications technologies, and can resolve a failure problem that is caused in a subsequent configuration process because a mobile phone obtains an incorrect public key of a print device. The method in the present invention includes: sending, by a first device, a service query request message to a second device, where the service query request message includes service information that the first device needs to query, so that the second device determines, according to the service information, whether to respond to the service query request message; receiving, by the first device, a service query response message, where the service query response message includes a public key derivative value of the second device; obtaining, by the first device, public key matching information; and after verifying that the public key matching information matches the public key derivative value, sending, by the first device, communication information to the second device to communicate with the second device. The present invention is applicable to a wireless communications device such as a Wi-Fi or Bluetooth device.

## Description

This application claims priority to Chinese Patent Application No. 201410616545.5, filed with the Chinese Patent Office on October 31, 2014, which is incorporated herein by reference in its entirety.

### TECHNICAL FIELD

The present invention relates to the field of communications technologies, and in particular, to an inter-device discovery method and apparatus.

### BACKGROUND

When Wi-Fi (Wireless Fidelity, Wireless Fidelity) devices communicate with each other, a communication connection first needs to be established between the devices. For example, when a user prints a file by using a mobile phone, the mobile phone first needs to establish a communication connection to a print device. A specific process is as follows: First, the mobile phone discovers print devices, creates a print device name list, and obtains a MAC (Medium Access Control, Medium Access Control layer) address of each print device in the list for the purpose of subsequent information interaction. In this process, the mobile phone may actively discover a target device in a scanning manner, or the mobile phone may passively discover a target device by receiving a target device discovery message. Then, the user selects one print device from the print device list as a target device for printing, and the mobile phone completes an authentication configuration process by means of information interaction with the target device. An objective of authentication configuration is to obtain a security key between the mobile phone and the target device to ensure secure connection establishment. The authentication configuration process is as follows: The mobile phone obtains, by scanning a quick response code of the target device, a public key included in the quick response code, and then performs a key exchange algorithm with the target device to obtain the security key, thereby completing device configuration.

At least the following problem exists in the prior art: In the foregoing process, after selecting the target device from the multiple print devices, the user obtains the public key of the target device by scanning the quick response code of the target device by using a mobile phone. However, after the target device is selected, the user uses the mobile phone to scan the quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails.

### SUMMARY

Embodiments of the present invention provide an inter-device discovery method and apparatus, and can resolve a failure problem that is caused in a subsequent configuration process because a mobile phone obtains an incorrect public key of a print device.

To achieve the foregoing objective, the following technical solutions are used in the embodiments of the present invention:

According to a first aspect, an embodiment of the present invention provides an inter-device discovery method, including:
sending, by a first device, a service query request message to a second device, where the service query request message includes service information that the first device needs to query, so that the second device determines, according to the service information, whether to respond to the service query request message;
receiving, by the first device, a service query response message, where the service query response message is sent by the second device after the second device determines to respond to the service query request message, and the service query response message includes a public key derivative value of the second device;
obtaining, by the first device, public key matching information; and
sending, by the first device after verifying that the public key matching information matches the public key derivative value, communication information to the second device to communicate with the second device.

With reference to the first aspect, in a first possible implementation manner of the first aspect, the sending, by a first device, a service query request message to a second device includes:
sending, by the first device, the service query request message to target devices in a broadcast manner, where the target devices include the second device and at least one third device, and the service query request message includes the service information that the first device needs to query, so that the target devices determine, according to the service information, whether to respond to the service query request message; and
before the obtaining, by the first device, public key matching information, the method further includes:
   receiving, by the first device, a service query response message sent by the at least one third device, where the service query response message sent by the at least one third device is sent after the at least one third device determines to respond to the service query request message, and the service query response message sent by the at least one third device includes a public key derivative value of the at least one third device.

With reference to the first aspect, in a second possible implementation manner of the first aspect, before the sending, by a first device, a service query request message to a second device, the method further includes:
obtaining, by the first device, the service information.

With reference to the first aspect or either of the possible implementation manners of the first aspect, in a third possible implementation manner of the first aspect, the service information includes a service name or a service name derivative value.

With reference to the first aspect, in a fourth possible implementation manner of the first aspect, the service query response message includes an authentication manner supported by the second device and/or a device type and role of the second device.

According to a second aspect, an embodiment of the present invention provides an inter-device discovery method, including:
receiving, by a first device, a service query request message sent by a second device, where the service query request message includes service information that the second device needs to query;
sending, by the first device, a service query response message to the second device when the first device determines to respond to the service query request message, where the service query response message includes a public key derivative value of the first device, so that the second device verifies whether obtained public key matching information is consistent with the public key derivative value; and
communicating, by the first device, with the second device when the first device receives communication information sent by the second device.

With reference to the second aspect, in a first possible implementation manner of the second aspect, before the sending, by the first device, a service query response message to the second device when the first device determines to respond to the service query request message, the method further includes:
determining, by the first device, whether a service that can be provided by the first device is consistent with the service information; and
when the service that can be provided by the first device is consistent with the service information, determining, by the first device, to respond to the service query request message.

With reference to the second aspect, in a second possible implementation manner of the second aspect, before the sending, by the first device, a service query response message to the second device when the first device determines to respond to the service query request message, the method further includes:
generating, by the first device, the public key derivative value according to a public key of the first device.

With reference to the second possible implementation manner of the second aspect, in a third possible implementation manner of the second aspect, the public key derivative value is a public key hash value.

With reference to the second aspect or the first possible implementation manner of the second aspect, in a fourth possible implementation manner of the second aspect, the service information includes a service name or a service name derivative value.

With reference to the second aspect or the first possible implementation manner of the second aspect, in a fifth possible implementation manner of the second aspect, the service query response message includes an authentication manner supported by the first device and/or a device type and role of the first device.

According to a third aspect, an embodiment of the present invention provides an inter-device discovery method, including:
sending, by a first device, a service query request message to a second device, where the service query request message includes service information that the first device needs to query and a public key derivative value of the second device, so that the second device determines, according to the service information and the public key derivative value, whether to respond to the service query request message;
receiving, by the first device, a service query response message, where the service query response message is sent by the second device after the second device determines to respond to the service query request message; and
sending, by the first device, communication information to the second device to communicate with the second device.

With reference to the third aspect, in a first possible implementation manner of the third aspect, the sending, by a first device, a service query request message to a second device includes:
sending, by the first device, the service query request message to target devices in a broadcast manner, where the target devices include the second device and at least one third device, and the service query request message includes the service information that the first device needs to query and the public key derivative value of the second device, so that the target devices determine, according to the service information and the public key derivative value, whether to respond to the service query request message.

With reference to the third aspect, in a second possible implementation manner of the third aspect, before the sending, by a first device, a service query request message to a second device, the method further includes:
obtaining, by the first device, the service information and the public key derivative value of the second device.

With reference to the second possible implementation manner of the third aspect, in a third possible implementation manner of the third aspect, the obtaining, by the first device, the public key derivative value of the second device includes:
obtaining, by the first device, a public key of the second device; and
generating, by the first device, the public key derivative value of the second device according to the public key.

With reference to the third aspect or any one of the possible implementation manners of the third aspect, in a fourth possible implementation manner of the third aspect, the public key derivative value is a public key hash value.

With reference to the third aspect, the first possible implementation manner of the third aspect, or the first possible implementation manner of the third aspect, in a fifth possible implementation manner of the third aspect, the service information includes a service name or a service name derivative value.

With reference to the third aspect, in a sixth possible implementation manner of the third aspect, the service query response message includes an authentication manner supported by the second device and/or a device type and role of the second device.

According to a fourth aspect, an embodiment of the present invention provides an inter-device discovery method, including:
receiving, by a first device, a service query request message sent by a second device, where the service query request message includes service information that the second device needs to query and a public key derivative value of the first device;
sending, by the first device, a service query response message to the second device when the first device determines, according to the service information and the public key derivative value, to respond to the service query request message; and
communicating, by the first device, with the second device when the first device receives communication information sent by the second device.

With reference to the fourth aspect, in a first possible implementation manner of the fourth aspect, before the sending, by the first device, a service query response message to the second device when the first device determines, according to the service information and the public key derivative value, to respond to the service query request message, the method further includes:
determining, by the first device, whether a service that can be provided by the first device is consistent with the service information;
determining, by the first device, whether the public key derivative value matches a public key of the first device; and
when the service that can be provided by the first device is consistent with the service information, and the public key derivative value matches the public key of the first device, determining, by the first device, to respond to the service query request message.

With reference to the first possible implementation manner of the fourth aspect, in a second possible implementation manner of the fourth aspect, the public key derivative value is a public key hash value.

With reference to the first possible implementation manner of the fourth aspect, in a third possible implementation manner of the fourth aspect, the service information includes a service name or a service name derivative value.

With reference to the first possible implementation manner of the fourth aspect, in a fifth possible implementation manner of the fourth aspect, the service query response message includes an authentication manner supported by the first device and/or a device type and role of the first device.

According to a fifth aspect, an embodiment of the present invention provides an inter-device discovery method, including:
sending, by a first device, a public key derivative value of a second device to the second device, so that the second device determines, according to the public key derivative value, whether to return a response message to the first device;
receiving, by the first device, a response message sent by the second device, where the response message is sent by the second device after the second device determines to return a response message to the first device; and
sending, by the first device, communication information to the second device to communicate with the second device.

With reference to the fifth aspect, in a first possible implementation manner of the fifth aspect, before the sending, by the first device, communication information to the second device to communicate with the second device, the method further includes:
sending, by the first device, a service query request message to the second device, where the service query request message includes service information that the first device needs to query, so that the second device determines, according to the service information, whether to respond to the service query request message; and
receiving, by the first device, a service query response message sent by the second device, where the service query response message is sent by the second device after the second device determines to respond to the service query request message.

With reference to the fifth aspect, in a second possible implementation manner of the fifth aspect, the sending, by a first device, a public key derivative value of a second device to the second device includes:
sending, by the first device, the public key derivative value to target devices in a broadcast manner, so that the target devices determine, according to the public key derivative value, whether to return a response message to the first device, where the target devices include the second device and at least one third device.

With reference to the first possible implementation manner of the fifth aspect, in a third possible implementation manner of the fifth aspect, before the sending, by the first device, a service query request message to the second device, the method further includes:
obtaining, by the first device, the service information.

With reference to the first possible implementation manner of the fifth aspect or the third possible implementation manner of the fifth aspect, in a fourth possible implementation manner of the fifth aspect, the service information includes a service name or a service name derivative value.

With reference to the fifth aspect, in a fifth possible implementation manner of the fifth aspect, before the sending, by a first device, a public key derivative value of a second device to the second device, the method further includes:
obtaining, by the first device, the public key derivative value of the second device.

With reference to the fifth possible implementation manner of the fifth aspect, in a sixth possible implementation manner of the fifth aspect, the obtaining, by the first device, the public key derivative value of the second device includes:
obtaining, by the first device, a public key of the second device; and
generating, by the first device, the public key derivative value of the second device according to the public key.

With reference to the fifth aspect, the second possible implementation manner of the fifth aspect, the fifth possible implementation manner of the fifth aspect, or the sixth possible implementation manner of the fifth aspect, in a seventh possible implementation manner of the fifth aspect, the public key derivative value is a public key hash value.

With reference to the fifth aspect, in an eighth possible implementation manner of the fifth aspect, the response message includes an authentication manner supported by the second device and/or a device type and role of the second device.

According to a sixth aspect, an embodiment of the present invention provides an inter-device discovery method, including:
receiving, by a first device, a public key derivative value of a second device that is sent by the second device;
sending, by the first device, a response message to the second device when the first device determines, according to the public key derivative value, to return response information to the second device; and
communicating, by the first device, with the second device when the first device receives communication information sent by the second device.

With reference to the sixth aspect, in a first possible implementation manner of the sixth aspect, before the sending, by the first device, a response message to the second device when the first device determines, according to the public key derivative value, to return response information to the second device, the method further includes:
determining, by the first device, whether the public key derivative value matches a public key of the first device; and
when the public key derivative value matches the public key of the first device, determining, by the first device, to return response information to the second device.

With reference to the first possible implementation manner of the sixth aspect, in a second possible implementation manner of the sixth aspect, before the communicating, by the first device, with the second device when the first device receives communication information sent by the second device, the method further includes:
receiving, by the first device, a service query request message sent by the second device, where the service query request message includes service information that the second device needs to query; and
sending, by the first device, a service query response message to the second device when the first device determines, according to the service information, to respond to the service query request message.

With reference to the second possible implementation manner of the sixth aspect, in a third possible implementation manner of the sixth aspect, before the sending, by the first device, a service query response message to the second device when the first device determines, according to the service information, to respond to the service query request message, the method further includes:
determining, by the first device, whether a service that can be provided by the first device is consistent with the service information; and
when the service that can be provided by the first device is consistent with the service information, determining, by the first device, to respond to the service query request message.

With reference to the sixth aspect or the first possible implementation manner of the sixth aspect, in a fourth possible implementation manner of the sixth aspect, the public key derivative value is a public key hash value.

With reference to the second possible implementation manner of the sixth aspect or the third possible implementation manner of the sixth aspect, in a fifth possible implementation manner of the sixth aspect, the service information includes a service name or a service name derivative value.

With reference to the second possible implementation manner of the sixth aspect or the third possible implementation manner of the sixth aspect, in a sixth possible implementation manner of the sixth aspect, the service query response message includes an authentication manner supported by the first device and/or a device type and role of the first device.

According to a seventh aspect, an embodiment of the present invention provides an inter-device discovery method, including:
receiving, by a first device, a public key derivative value of a second device that is sent by the second device;
obtaining, by the first device, public key matching information; and
sending, by the first device after verifying that the public key matching information matches the public key derivative value, communication information to the second device to communicate with the second device.

With reference to the seventh aspect, in a first possible implementation manner of the seventh aspect, before the sending, by the first device after verifying that the public key matching information matches the public key derivative value, communication information to the second device to communicate with the second device, the method further includes:
receiving, by the first device, a service query request message sent by the second device, where the service query request message includes service information that can be provided by the second device; and
the sending, by the first device after verifying that the public key matching information matches the public key derivative value, communication information to the second device to communicate with the second device includes:
   sending, by the first device after verifying that the public key matching information matches the public key derivative value and whether a service that the first device needs to query matches the service information, the communication information to the second device to communicate with the second device.

With reference to the seventh aspect or the first possible implementation manner of the seventh aspect, in a second possible implementation manner of the seventh aspect, the public key derivative value is a public key hash value.

With reference to the seventh aspect, in a third possible implementation manner of the seventh aspect, before the receiving, by a first device, a public key derivative value of a second device that is sent by the second device, the method further includes:
synchronizing, by the first device, with the second device.

According to an eighth aspect, an embodiment of the present invention provides an inter-device discovery method, including:
sending, by a first device, a public key derivative value of the first device to a second device, so that the second device verifies whether the public key derivative value matches public key matching information obtained by the second device; and
communicating, by the first device, with the second device when the first device receives communication information sent by the second device.

With reference to the eighth aspect, in a first possible implementation manner of the eighth aspect, before the communicating, by the first device, with the second device, the method further includes:
sending, by the first device, a service query request message to the second device, where the service query request message is service information that can be provided by the first device, so that the second device determines whether the service information is consistent with a service that the first device needs to query.

With reference to the eighth aspect, in a second possible implementation manner of the eighth aspect, before the sending, by a first device, a public key derivative value of the first device to a second device, the method further includes:
generating, by the first device, the public key derivative value according to a public key of the first device.

With reference to the eighth aspect or the second possible implementation manner of the eighth aspect, in a third possible implementation manner of the eighth aspect, the public key derivative value is a public key hash value.

With reference to the eighth aspect, in the third possible implementation manner of the eighth aspect, before the sending, by a first device, a public key derivative value of the first device to a second device, the method further includes:
synchronizing, by the first device, with the second device.

According to a ninth aspect, an embodiment of the present invention provides an inter-device discovery apparatus, including:
a sending unit, configured to send a service query request message to a second device, where the service query request message includes service information that the first device needs to query, so that the second device determines, according to the service information, whether to respond to the service query request message;
a receiving unit, configured to receive a service query response message, where the service query response message is sent by the second device after the second device determines to respond to the service query request message, and the service query response message includes a public key derivative value of the second device; and
an obtaining unit, configured to obtain public key matching information; where
the sending unit is further configured to: after the first device verifies that the public key matching information matches the public key derivative value, send communication information to the second device to communicate with the second device.

With reference to the ninth aspect, in a first possible implementation manner of the ninth aspect, the sending unit is specifically configured to send the service query request message to target devices in a broadcast manner, where the target devices include the second device and at least one third device, and the service query request message includes the service information that the first device needs to query, so that the target devices determine, according to the service information, whether to respond to the service query request message; and
the receiving unit is further configured to receive a service query response message sent by the at least one third device, where the service query response message sent by the at least one third device is sent after the at least one third device determines to respond to the service query request message, and the service query response message sent by the at least one third device includes a public key derivative value of the at least one third device.

With reference to the ninth aspect, in a second possible implementation manner of the ninth aspect, the obtaining unit is further configured to obtain the service information.

With reference to the ninth aspect or either of the possible implementation manners of the ninth aspect, in a third possible implementation manner of the ninth aspect, the service information includes a service name or a service name derivative value.

With reference to the ninth aspect, in a fourth possible implementation manner of the ninth aspect, the service query response message includes an authentication manner supported by the second device and/or a device type and role of the second device.

According to a tenth aspect, an embodiment of the present invention provides an inter-device discovery apparatus, including:
a receiving unit, configured to receive a service query request message sent by a second device, where the service query request message includes service information that the second device needs to query;
a sending unit, configured to send a service query response message to the second device when the first device determines to respond to the service query request message, where the service query response message includes a public key derivative value of the first device, so that the second device verifies whether obtained public key matching information is consistent with the public key derivative value; and
a communications unit, configured to communicate with the second device when the first device receives communication information sent by the second device.

With reference to the tenth aspect, in a first possible implementation manner of the tenth aspect, the apparatus further includes:
a comparison unit, configured to determine whether a service that can be provided by the first device is consistent with the service information; and
a determining unit, configured to: when the service that can be provided by the first device is consistent with the service information, determine to respond to the service query request message.

With reference to the tenth aspect, in a second possible implementation manner of the tenth aspect, the apparatus further includes:
a generation unit, configured to generate the public key derivative value according to a public key of the first device.

With reference to the second possible implementation manner of the tenth aspect, in a third possible implementation manner of the tenth aspect, the public key derivative value is a public key hash value.

With reference to the tenth aspect or the first possible implementation manner of the tenth aspect, in a fourth possible implementation manner of the tenth aspect, the service information includes a service name or a service name derivative value.

With reference to the tenth aspect or the first possible implementation manner of the tenth aspect, in a fifth possible implementation manner of the tenth aspect, the service query response message includes an authentication manner supported by the first device and/or a device type and role of the first device.

According to an eleventh aspect, an embodiment of the present invention provides an inter-device discovery apparatus, including:
a sending unit, configured to send a service query request message to a second device, where the service query request message includes service information that the first device needs to query and a public key derivative value of the second device, so that the second device determines, according to the service information and the public key derivative value, whether to respond to the service query request message; and
a receiving unit, configured to receive a service query response message, where the service query response message is sent by the second device after the second device determines to respond to the service query request message; where
the sending unit is further configured to send communication information to the second device to communicate with the second device.

With reference to the eleventh aspect, in a first possible implementation manner of the eleventh aspect, the sending unit is specifically configured to send the service query request message to target devices in a broadcast manner, where the target devices include the second device and at least one third device, and the service query request message includes the service information that the first device needs to query and the public key derivative value of the second device, so that the target devices determine, according to the service information and the public key derivative value, whether to respond to the service query request message.

With reference to the eleventh aspect, in a second possible implementation manner of the eleventh aspect, the apparatus further includes:
an obtaining unit, configured to obtain the service information and the public key derivative value of the second device.

With reference to the second possible implementation manner of the eleventh aspect, in a third possible implementation manner of the eleventh aspect, the obtaining unit includes:
an obtaining subunit, configured to obtain a public key of the second device; and
a generation subunit, configured to generate the public key derivative value of the second device according to the public key.

With reference to the eleventh aspect or any one of the possible implementation manners of the eleventh aspect, in a fourth possible implementation manner of the eleventh aspect, the public key derivative value is a public key hash value.

With reference to the eleventh aspect, the first possible implementation manner of the eleventh aspect, or the first possible implementation manner of the eleventh aspect, in a fifth possible implementation manner of the eleventh aspect, the service information includes a service name or a service name derivative value.

With reference to the eleventh aspect, in a sixth possible implementation manner of the eleventh aspect, the service query response message includes an authentication manner supported by the second device and/or a device type and role of the second device.

According to a twelfth aspect, an embodiment of the present invention provides an inter-device discovery apparatus, including:
a receiving unit, configured to receive a service query request message sent by a second device, where the service query request message includes service information that the second device needs to query and a public key derivative value of the first device;
a sending unit, configured to send a service query response message to the second device when the first device determines, according to the service information and the public key derivative value, to respond to the service query request message; and
a communications unit, configured to communicate with the second device when the first device receives communication information sent by the second device.

With reference to the twelfth aspect, in a first possible implementation manner of the twelfth aspect, the apparatus further includes:
a comparison unit, configured to determine whether a service that can be provided by the first device is consistent with the service information; where
the comparison unit is further configured to determine whether the public key derivative value matches a public key of the first device; and
a determining unit, configured to: when the service that can be provided by the first device is consistent with the service information, and the public key derivative value matches the public key of the first device, determine to respond to the service query request message.

With reference to the first possible implementation manner of the twelfth aspect, in a second possible implementation manner of the twelfth aspect, the public key derivative value is a public key hash value.

With reference to the first possible implementation manner of the twelfth aspect, in a third possible implementation manner of the twelfth aspect, the service information includes a service name or a service name derivative value.

With reference to the first possible implementation manner of the twelfth aspect, in a fifth possible implementation manner of the twelfth aspect, the service query response message includes an authentication manner supported by the first device and/or a device type and role of the first device.

According to a thirteenth aspect, an embodiment of the present invention provides an inter-device discovery apparatus, including:
a sending unit, configured to send a public key derivative value of a second device to the second device, so that the second device determines, according to the public key derivative value, whether to return a response message to the first device; and
a receiving unit, configured to receive a response message sent by the second device, where the response message is sent by the second device after the second device determines to return a response message to the first device; where
the sending unit is further configured to send communication information to the second device to communicate with the second device.

With reference to the thirteenth aspect, in a first possible implementation manner of the thirteenth aspect, the sending unit is further configured to send a service query request message to the second device, where the service query request message includes service information that the first device needs to query, so that the second device determines, according to the service information, whether to respond to the service query request message; and
the receiving unit is further configured to receive a service query response message sent by the second device, where the service query response message is sent by the second device after the second device determines to respond to the service query request message.

With reference to the thirteenth aspect, in a second possible implementation manner of the thirteenth aspect, the sending unit is specifically configured to send the public key derivative value to target devices in a broadcast manner, so that the target devices determine, according to the public key derivative value, whether to return a response message to the first device, where the target devices include the second device and at least one third device.

With reference to the first possible implementation manner of the thirteenth aspect, in a third possible implementation manner of the thirteenth aspect, the apparatus further includes:
an obtaining unit, configured to obtain the service information.

With reference to the first possible implementation manner of the thirteenth aspect or the third possible implementation manner of the thirteenth aspect, in a fourth possible implementation manner of the thirteenth aspect, the service information includes a service name or a service name derivative value.

With reference to the thirteenth aspect, in a fifth possible implementation manner of the thirteenth aspect, the obtaining unit is further configured to obtain the public key derivative value of the second device.

With reference to the fifth possible implementation manner of the thirteenth aspect, in a sixth possible implementation manner of the thirteenth aspect, the obtaining unit includes:
an obtaining subunit, configured to obtain a public key of the second device; and
a generation subunit, configured to generate the public key derivative value of the second device according to the public key.

With reference to the thirteenth aspect, the second possible implementation manner of the thirteenth aspect, the fifth possible implementation manner of the thirteenth aspect, or the sixth possible implementation manner of the thirteenth aspect, in a seventh possible implementation manner of the thirteenth aspect, the public key derivative value is a public key hash value.

With reference to the thirteenth aspect, in an eighth possible implementation manner of the thirteenth aspect, the response message includes an authentication manner supported by the second device and/or a device type and role of the second device.

According to a fourteenth aspect, an embodiment of the present invention provides an inter-device discovery apparatus, including:
a receiving unit, configured to receive a public key derivative value of a second device that is sent by the second device;
a sending unit, configured to send a response message to the second device when the first device determines, according to the public key derivative value, to return response information to the second device; and
a communications unit, configured to communicate with the second device when the first device receives communication information sent by the second device.

With reference to the fourteenth aspect, in a first possible implementation manner of the fourteenth aspect, the apparatus further includes:
a comparison unit, configured to determine whether the public key derivative value matches a public key of the first device; and
a determining unit, configured to: when the public key derivative value matches the public key of the first device, determine to return response information to the second device.

With reference to the first possible implementation manner of the fourteenth aspect, in a second possible implementation manner of the fourteenth aspect, the receiving unit is further configured to receive a service query request message sent by the second device, where the service query request message includes service information that the second device needs to query; and
the sending unit is further configured to send a service query response message to the second device when the first device determines, according to the service information, to respond to the service query request message.

With reference to the second possible implementation manner of the fourteenth aspect, in a third possible implementation manner of the fourteenth aspect, the comparison unit is further configured to determine whether a service that can be provided by the first device is consistent with the service information; and
the determining unit is further configured to: when the service that can be provided by the first device is consistent with the service information, determine to respond to the service query request message.

With reference to the fourteenth aspect or the first possible implementation manner of the fourteenth aspect, in a fourth possible implementation manner of the fourteenth aspect, the public key derivative value is a public key hash value.

With reference to the second possible implementation manner of the fourteenth aspect or the third possible implementation manner of the fourteenth aspect, in a fifth possible implementation manner of the fourteenth aspect, the service information includes a service name or a service name derivative value.

With reference to the second possible implementation manner of the fourteenth aspect or the third possible implementation manner of the fourteenth aspect, in a sixth possible implementation manner of the fourteenth aspect, the service query response message includes an authentication manner supported by the first device and/or a device type and role of the first device.

According to a fifteenth aspect, an embodiment of the present invention provides an inter-device discovery apparatus, including:
a receiving unit, configured to receive a public key derivative value of a second device that is sent by the second device;
an obtaining unit, configured to obtain public key matching information; and
a sending unit, configured to: after the first device verifies that the public key matching information matches the public key derivative value, send communication information to the second device to communicate with the second device.

With reference to the fifteenth aspect, in a first possible implementation manner of the fifteenth aspect, the receiving unit is further configured to receive a service query request message sent by the second device, where the service query request message includes service information that can be provided by the second device; and
the sending unit is further configured to: after it is verified that the public key matching information matches the public key derivative value and whether a service that the first device needs to query matches the service information, send the communication information to the second device to communicate with the second device.

With reference to the fifteenth aspect or the first possible implementation manner of the fifteenth aspect, in a second possible implementation manner of the fifteenth aspect, the public key derivative value is a public key hash value.

With reference to the fifteenth aspect, in a third possible implementation manner of the fifteenth aspect, the apparatus further includes:
a synchronization unit, configured to synchronize with the second device.

According to a sixteenth aspect, an embodiment of the present invention provides an inter-device discovery apparatus, including:
a sending unit, configured to send a public key derivative value of the first device to a second device, so that the second device verifies whether the public key derivative value matches public key matching information obtained by the second device; and
a communications unit, configured to communicate with the second device when the first device receives communication information sent by the second device.

With reference to the sixteenth aspect, in a first possible implementation manner of the sixteenth aspect, the sending unit is further configured to send a service query request message to the second device, where the service query request message is service information that can be provided by the first device, so that the second device determines whether the service information is consistent with a service that the first device needs to query.

With reference to the sixteenth aspect, in a second possible implementation manner of the sixteenth aspect, the apparatus further includes:
a generation unit, configured to generate the public key derivative value according to a public key of the first device.

With reference to the sixteenth aspect or the second possible implementation manner of the sixteenth aspect, in a third possible implementation manner of the sixteenth aspect, the public key derivative value is a public key hash value.

With reference to the sixteenth aspect, in the third possible implementation manner of the sixteenth aspect, the apparatus further includes:
a synchronization unit, configured to synchronize with the second device.

According to a seventeenth aspect, an inter-device discovery method is provided, including:
obtaining, by a first device, a public key of the second device;
generating, by the first device, a public key derivative value of the second device according to the public key; and
sending, by the first device, the public key derivative value of the second device to the second device, so that the second device verifies whether the received public key derivative value of the second device is correct; and after receiving a response message sent by the second device, sending, by the first device, communication information to the second device to communicate with the second device, where the response message is sent by the second device to the first device after the second device verifies that the received public key derivative value of the second device is correct; or
receiving, by the first device, a public key derivative value of the second device that is sent by the second device; verifying whether the received public key derivative value of the second device is correct; if the received public key derivative value of the second device is correct, sending, by the first device, a response message to the second device; and communicating, by the first device, with the second device after receiving communication information sent by the second device, where the communication information is sent by the second device to the first device after the second device receives the response message; where
the public key derivative value is a static or dynamic value, and the public key derivative value of the second device is a hash value generated based on the public key of the second device, a hash value generated based on the public key of the second device and agreed plaintext information, a truncated value of the public key of the second device, or a truncated value of a hash value generated based on the public key of the second device.

According to an eighteenth aspect, an inter-device discovery method is provided, including:
receiving, by a second device, a public key derivative value of the second device that is sent by a first device after the first device obtains a public key of the second device and generates the public key derivative value of the second device according to the public key; verifying, by the second device, whether the received public key derivative value of the second device is correct; after verifying that the received public key derivative value of the second device is correct, sending, by the second device, a response message to the first device; receiving, by the second device, communication information sent by the first device to the second device after the first device receives the response message sent by the second device, to communicate with the first device; or
sending, by a second device, a public key derivative value of the second device to a first device, so that after obtaining a public key of the second device and generating a public key derivative value of the second device according to the public key, the first device verifies whether the received public key derivative value of the second device is correct; receiving, by the second device, a response message sent by the first device to the second device after the first device verifies that the received public key derivative value of the second device is correct; and sending, by the second device after receiving the response message, communication information to the first device to communicate with the first device; where
the public key derivative value is a static or dynamic value, and the public key derivative value of the second device is a hash value generated based on the public key of the second device, a hash value generated based on the public key of the second device and agreed plaintext information, a truncated value of the public key of the second device, or a truncated value of a hash value generated based on the public key of the second device.

According to a nineteenth aspect, an inter-device discovery apparatus is provided, where the apparatus is a first device and includes:
an obtaining unit, configured to: obtain a public key of the second device, and generate a public key derivative value of the second device according to the public key;
a first sending unit, configured to send the public key derivative value of the second device to the second device, so that the second device verifies whether the received public key derivative value of the second device is correct; and a first receiving unit, configured to receive a response message sent by the second device, where the first sending unit is further configured to: after the first receiving unit receives the response message, send communication information to the second device to communicate with the second device, and the response message is sent by the second device to the first device after the second device verifies that the received public key derivative value of the second device is correct; or
a second receiving unit, configured to receive a public key derivative value of the second device that is sent by the second device; a verification unit, configured to verify whether the received public key derivative value of the second device is correct; and a second sending unit, configured to send a response message to the second device when the verification unit verifies that the received public key derivative value of the second device is correct, where the second receiving unit is further configured to communicate with the second device after receiving communication information sent by the second device, and the communication information is sent by the second device to the first device after the second device receives the response message; where
the public key derivative value is a static or dynamic value, and the public key derivative value of the second device is a hash value generated based on the public key of the second device, a hash value generated based on the public key of the second device and agreed plaintext information, a truncated value of the public key of the second device, or a truncated value of a hash value generated based on the public key of the second device.

According to a twentieth aspect, an inter-device discovery apparatus is provided, where the apparatus is a second device and includes:
a first receiving unit, configured to receive a public key derivative value of the second device that is sent by a first device after the first device obtains a public key of the second device and generates the public key derivative value of the second device; a verification unit, configured to verify whether the received public key derivative value of the second device is correct; and a first sending unit, configured to send a response message to the first device after the verification unit verifies that the received public key derivative value of the second device is correct, where the first receiving unit is further configured to receive communication information sent by the first device to the second device after the first device receives the response message sent by the second device, to communicate with the first device; or
a second sending unit, configured to send a public key derivative value of the second device to a first device, so that after obtaining a public key of the second device and generating a public key derivative value of the second device according to the public key, the first device verifies whether the received public key derivative value of the second device is correct; and a second receiving unit, configured to receive a response message sent by the first device to the second device after the first device verifies that the received public key derivative value of the second device is correct, where the second sending unit is further configured to: after the second receiving unit receives the response message, send communication information to the first device to communicate with the first device; where
the public key derivative value is a static or dynamic value, and the public key derivative value of the second device is a hash value generated based on the public key of the second device, a hash value generated based on the public key of the second device and agreed plaintext information, a truncated value of the public key of the second device, or a truncated value of a hash value generated based on the public key of the second device.

According to a twenty-first aspect, an inter-device discovery method is provided, including:
sending, by a first device, a service query request message to a second device, where the service query request message includes service information that the first device needs to query, so that the second device determines, according to the service information, whether to respond to the service query request message;
receiving, by the first device, a service query response message, where the service query response message is sent by the second device after the second device determines to respond to the service query request message;
receiving, by the first device, a public key derivative value of the second device that is sent by the second device;
obtaining, by the first device, public key matching information; and
sending, by the first device after receiving the service query response message and verifying that the public key matching information matches the public key derivative value of the second device, communication information to the second device to communicate with the second device.

With reference to the twenty-first aspect, in a first possible implementation manner, the public key derivative value of the second device that is sent by the second device is specifically carried in the service query response message.

With reference to the twenty-first aspect, in a second possible implementation manner, the first device specifically sends the service query request message to the second device after receiving the public key derivative value of the second device that is sent by the second device and verifying that the public key matching information matches the public key derivative value of the second device.

According to a twenty-second aspect, an inter-device discovery method is provided, including:
sending, by a first device, a service query request message to a second device, where the service query request message includes service information that the first device needs to query, so that the second device determines, according to the service information, whether to respond to the service query request message;
receiving, by the first device, a service query response message, where the service query response message is sent by the second device after the second device determines to respond to the service query request message;
sending, by the first device, a public key derivative value of the second device to the second device, so that the second device performs verification on the received public key derivative value of the second device; and
after the service query response message is received, and the public key derivative value of the second device is verified, sending, by the first device, communication information to the second device to communicate with the second device.

With reference to the twenty-second aspect, in a first possible implementation manner, the public key derivative value of the second device that is sent by the first device is specifically carried in the service query request message.

With reference to the twenty-second aspect, in a second possible implementation manner, the first device specifically sends the service query request message to the second device after the public key derivative value of the second device is sent to the second device and the public key derivative value of the second device is verified.

According to a twenty-third aspect, an inter-device discovery method is provided, including:
receiving, by a first device, a public key derivative value of a second device that is sent by the second device;
obtaining, by the first device, public key matching information;
receiving, by the first device, a service query request message sent by the second device, where the service query request message includes service information that can be provided by the second device; and
after verifying that the public key matching information matches the public key derivative value of the second device and a service that the first device needs to query matches the service information that can be provided by the second device, sending, by the first device, communication information to the second device to communicate with the second device.

With reference to the twenty-third aspect, in a first possible implementation manner, the public key derivative value of the second device that is sent by the second device is specifically carried in the service query request message sent by the second device.

According to a twenty-fourth aspect, an inter-device discovery apparatus is provided, where the apparatus is a first device and includes:
a sending unit, configured to send a service query request message to a second device, where the service query request message includes service information that the first device needs to query, so that the second device determines, according to the service information, whether to respond to the service query request message;
a receiving unit, configured to receive a service query response message, where the service query response message is sent by the second device after the second device determines to respond to the service query request message; where
the receiving unit is further configured to receive a public key derivative value of the second device that is sent by the second device; and
an obtaining unit, configured to obtain public key matching information; where
the sending unit is further configured to: after the receiving unit receives the service query response message and the first device verifies that the public key matching information matches the public key derivative value of the second device, send communication information to the second device to communicate with the second device.

With reference to the twenty-fourth aspect, in a first possible implementation manner, the public key derivative value of the second device that is sent by the second device is specifically carried in the service query response message.

With reference to the twenty-fourth aspect, in a second possible implementation manner, that the sending unit is configured to send the service query request message to the second device is specifically:
the sending unit is configured to send the service query request message to the second device after the receiving unit receives the public key derivative value of the second device that is sent by the second device and the first device verifies that the public key matching information matches the public key derivative value of the second device.

According to a twenty-fifth aspect, an inter-device discovery apparatus is provided, where the apparatus is a first device and includes:
a sending unit, configured to send a service query request message to a second device, where the service query request message includes service information that the first device needs to query, so that the second device determines, according to the service information, whether to respond to the service query request message; and
a receiving unit, configured to receive a service query response message, where the service query response message is sent by the second device after the second device determines to respond to the service query request message; where
the sending unit is further configured to send a public key derivative value of the second device to the second device, so that the second device performs verification on the received public key derivative value of the second device; and
the sending unit is further configured to: after the receiving unit receives the service query response message and the public key derivative value of the second device is verified, send communication information to the second device to communicate with the second device.

With reference to the twenty-fifth aspect, in a first possible implementation manner, the public key derivative value of the second device that is sent by the first device is specifically carried in the service query request message.

With reference to the twenty-fifth aspect, in a second possible implementation manner, that the sending unit is configured to send the service query request message to the second device is specifically:
the sending unit is configured to send the service query request message to the second device after the public key derivative value of the second device is sent to the second device and the public key derivative value of the second device is verified.

According to a twenty-sixth aspect, an inter-device discovery apparatus is provided, where the apparatus is a first device and includes:
a receiving unit, configured to receive a public key derivative value of a second device that is sent by the second device;
an obtaining unit, configured to obtain public key matching information; where
the receiving unit is further configured to receive a service query request message sent by the second device, where the service query request message includes service information that can be provided by the second device; and
a sending unit, configured to: after the first device verifies that the public key matching information matches the public key derivative value and a service that the first device needs to query matches the service information that can be provided by the second device, send communication information to the second device to communicate with the second device.

With reference to the twenty-sixth aspect, in a first possible implementation manner, the public key derivative value of the second device that is sent by the second device is specifically carried in the service query request message sent by the second device.

According to a twenty-seventh aspect, an inter-device discovery method is provided, including:
receiving, by a second device, a service query request message sent by a first device, where the service query request message includes service information that the first device needs to query, so that the second device determines, according to the service information, whether to respond to the service query request message;
after determining to respond to the service query request message, sending, by the second device, a service query response message to the first device;
sending, by the second device, a public key derivative value of the second device to the first device, so that after obtaining public key matching information, the first device verifies whether the public key matching information matches the public key derivative value of the second device; and
communicating, by the second device, with the second device after receiving communication information sent by the first device, where the communication information is sent by the first device to the second device after the first device receives the service query response message and verifies that the public key matching information matches the public key derivative value of the second device.

With reference to the twenty-seventh aspect, in a first possible implementation manner, the public key derivative value of the second device that is sent by the second device is specifically carried in the service query response message.

With reference to the twenty-seventh aspect, in a second possible implementation manner, the service query request message is specifically sent by the first device to the second device after the first device receives the public key derivative value of the second device that is sent by the second device and verifies that the public key matching information matches the public key derivative value of the second device.

According to a twenty-eighth aspect, an inter-device discovery method is provided, including:
receiving, by a second device, a service query request message sent by a first device, where the service query request message includes service information that the first device needs to query;
after determining, according to the service information, to respond to the service query request message, sending, by the second device, a service query response message to the first device;
receiving, by the second device, a public key derivative value of the second device that is sent by the first device;
performing, by the second device, verification on the received public key derivative value of the second device; and
receiving, by the second device, communication information sent by the first device to the second device after the service query response message is received and the public key derivative value of the second device is verified, to communicate with the first device.

With reference to the twenty-eighth aspect, in a first possible implementation manner, the public key derivative value of the second device that is sent by the first device is specifically carried in the service query request message.

With reference to the twenty-eighth aspect, in a second possible implementation manner, the first device specifically sends the service query request message to the second device after the public key derivative value of the second device is sent to the second device and the public key derivative value of the second device is verified.

According to a twenty-ninth aspect, an inter-device discovery method is provided, including:
sending, by a second device, a public key derivative value of the second device to a first device, so that the first device obtains public key matching information, and verifies whether the public key matching information matches the public key derivative value of the second device;
sending, by the second device, a service query request message to the first device, where the service query request message includes service information that can be provided by the second device; and
receiving, by the second device, communication information sent by the first device to the second device after the first device verifies that the public key matching information matches the public key derivative value of the second device and that a service that the first device needs to query matches the service information that can be provided by the second device, to communicate with the first device.

With reference to the twenty-ninth aspect, in a first possible implementation manner, the public key derivative value of the second device that is sent by the second device is specifically carried in the service query request message sent by the second device.

According to a thirtieth aspect, an inter-device discovery apparatus is provided, where the apparatus is a second device and includes:
a receiving unit, configured to receive a service query request message sent by a first device, where the service query request message includes service information that the first device needs to query, so that the second device determines, according to the service information, whether to respond to the service query request message; and
a sending unit, configured to send a service query response message to the first device after the second device determines to respond to the service query request message; where
the sending unit is further configured to send a public key derivative value of the second device to the first device, so that after obtaining public key matching information, the first device verifies whether the public key matching information matches the public key derivative value of the second device; and
the receiving unit is further configured to communicate with the second device after receiving communication information sent by the first device, where the communication information is sent by the first device to the second device after the first device receives the service query response message and verifies that the public key matching information matches the public key derivative value of the second device.

With reference to the thirtieth aspect, in a first possible implementation manner, the public key derivative value of the second device is specifically carried in the service query response message.

According to a thirty-first aspect, an inter-device discovery apparatus is provided, where the apparatus is a second device and includes:
a receiving unit, configured to receive a service query request message sent by a first device, where the service query request message includes service information that the first device needs to query;
a sending unit, configured to: after the second device determines, according to the service information, to respond to the service query request message, send a service query response message to the first device; where
the receiving unit is further configured to receive a public key derivative value of the second device that is sent by the first device; and
a verification unit, configured to perform verification on the received public key derivative value of the second device; where
the receiving unit is further configured to receive communication information sent by the first device to the second device after the service query response message is received and the public key derivative value of the second device is verified, to communicate with the first device.

According to a thirty-second aspect, an inter-device discovery apparatus is provided, where the apparatus is a second device and includes:
a sending unit, configured to send a public key derivative value of the second device to a first device, so that the first device obtains public key matching information, and verifies whether the public key matching information matches the public key derivative value of the second device; where
the sending unit is further configured to send a service query request message to the first device, where the service query request message includes service information that can be provided by the second device; and
a receiving unit, configured to receive communication information sent by the first device to the second device after the first device verifies that the public key matching information matches the public key derivative value of the second device and that a service that the first device needs to query matches the service information that can be provided by the second device, to communicate with the first device.

For related content in the method or the apparatus involved in the foregoing aspects, reference may be made to each other, and details are not described. The public key derivative value is a static or dynamic value, and the public key derivative value of the second device is a hash value generated based on a public key of the second device, a hash value generated based on a public key of the second device and agreed plaintext information, a truncated value of a public key of the second device, or a truncated value of a hash value generated based on a public key of the second device.

Further, the first device may record information about a channel on which the second device is located, and hand a channel of the first device over to the channel of the second device after verifying that the public key matching information matches the public key derivative value of the second device.

According to an inter-device discovery method and apparatus provided in an aspect of the embodiments of the present invention, in the present invention, a first device sends a second device a service query request message that includes service information that the first device needs to query; after determining, according to the service information, to respond to the service query request message, the second device sends a service query response message that includes a public key derivative value of the second device; after receiving the service query response message, the first device obtains public key matching information, and matches the public key matching information with the public key derivative value; and the first device communicates with the second device after the first device verifies that the public key matching information matches the public key derivative value. In this way, after determining to respond to the service query request message of the first device, the second device sends the public key derivative value of the second device to the first device, the first device verifies whether the public key derivative value of the second device matches the obtained public key matching information, and the first device communicates with the second device only after the two match each other. Therefore, a success in subsequent configuration of the first device and the second device is ensured, and a failure that is caused in a subsequent configuration process because the first device obtains an incorrect public key of the second device is avoided.

According to an inter-device discovery method and apparatus provided in another aspect of the embodiments of the present invention, in the present invention, a first device sends a second device a service query request message that includes an obtained public key derivative value of the second device and obtained service information; after determining, according to the service information and the public key derivative value, to respond to the service query request message, the second device sends a service query response message to the first device; and the first device communicates with the second device after receiving the service query response message. In this way, the first device sends the public key derivative value of the second device to the second device, the second device determines, according to the public key derivative value of the second device, to respond to the first device, and then the first device communicates with the second device. Therefore, a failure that is caused in a subsequent configuration process because the first device obtains an incorrect public key of the second device is avoided.

According to an inter-device discovery method and apparatus provided in still another aspect of the embodiments of the present invention, in the present invention, a first device sends a public key derivative value of a second device to the second device; the second device sends a response message to the first device after determining, according to the public key derivative value, to return a response message to the first device; and the first device communicates with the second device after the first device receives the response message sent by the second device. In this way, the first device sends the public key derivative value of the second device to the second device, and the first device communicates with the second device only after the second device performs determining according to the public key derivative value. Therefore, a failure that is caused in a subsequent configuration process because the first device obtains an incorrect public key of the second device is avoided.

According to an inter-device discovery method and apparatus provided in yet another aspect of the embodiments of the present invention, in the present invention, a second device sends a public key derivative value of the second device to a first device; after obtaining public key matching information, the first device verifies whether the public key matching information matches the public key derivative value; and the first device communicates with the second device after the two match each other. In this way, the first device communicates with the second device only after verifying whether the obtained public key matching information matches the public key derivative value. Therefore, a failure that is caused in a subsequent configuration process because the first device obtains an incorrect public key of the second device is avoided.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method according to an embodiment of the present invention;
FIG. 2 is a flowchart of a method according to another embodiment of the present invention;
FIG. 3 is a flowchart of a method according to another embodiment of the present invention;
FIG. 4 is a flowchart of a method according to another embodiment of the present invention;
FIG. 5 is a flowchart of a method according to another embodiment of the present invention;
FIG. 6 is a flowchart of a method according to another embodiment of the present invention;
FIG. 7 is a flowchart of a method according to another embodiment of the present invention;
FIG. 8 is a flowchart of a method according to another embodiment of the present invention;
FIG. 9 is a flowchart of a method according to another embodiment of the present invention;
FIG. 10 is a flowchart of a method according to another embodiment of the present invention;
FIG. 11A and FIG. 11B are a flowchart of a method according to another embodiment of the present invention;
FIG. 12A and FIG. 12B are a flowchart of a method according to another embodiment of the present invention;
FIG. 13 is a flowchart of a method according to another embodiment of the present invention;
FIG. 14 is a flowchart of a method according to another embodiment of the present invention;
FIG. 15 is a flowchart of a method according to another embodiment of the present invention;
FIG. 16 is a schematic structural diagram of an apparatus according to another embodiment of the present invention;
FIG. 17 and FIG. 18 are schematic structural diagrams of an apparatus according to another embodiment of the present invention;
FIG. 19 and FIG. 20 are schematic structural diagrams of an apparatus according to another embodiment of the present invention;
FIG. 21 and FIG. 22 are schematic structural diagrams of an apparatus according to another embodiment of the present invention;
FIG. 23 and FIG. 24 are schematic structural diagrams of an apparatus according to another embodiment of the present invention;
FIG. 25 and FIG. 26 are schematic structural diagrams of an apparatus according to another embodiment of the present invention;
FIG. 27 and FIG. 28 are schematic structural diagrams of an apparatus according to another embodiment of the present invention; and
FIG. 29 and FIG. 30 are schematic structural diagrams of an apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

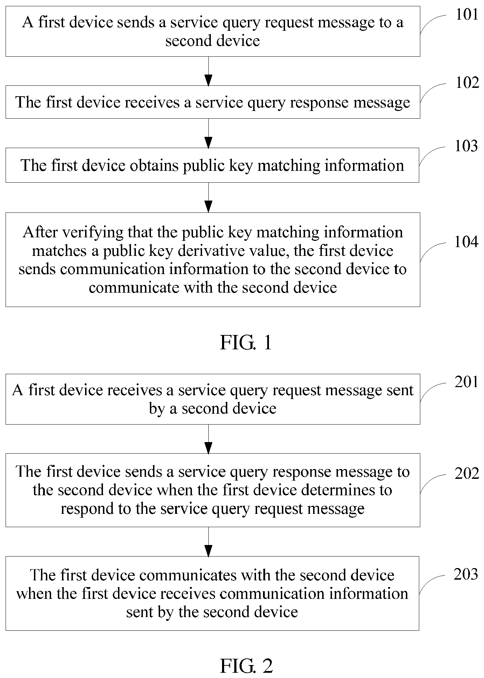

An embodiment of the present invention provides an inter-device discovery method. The method is applied to a first device, and the first device belongs to a Wi-Fi device. As shown in FIG. 1, the method includes the following steps:
101. The first device sends a service query request message to a second device.

The service query request message includes service information that the first device needs to query, so that the second device determines, according to the service information, whether to respond to the service query request message.

Optionally, that the first device sends a service query request message to a second device may be that the first device sends the service query request message to target devices in a broadcast manner, where the target devices include the second device and at least one third device, and the service query request message includes the service information that the first device needs to query, so that the target devices determine, according to the service information, whether to respond to the service query request message.

Optionally, before the first device sends the service query request message to the second device, the first device may further obtain the service information.

Optionally, the service information includes a service name or a service name derivative value, and the service name derivative value may be a service name hash value.

102. The first device receives a service query response message.

The service query response message is sent by the second device after the second device determines to respond to the service query request message, and the service query response message includes a public key derivative value of the second device.

Optionally, when sending the service query request message to the target devices in a broadcast manner, the first device may further receive a service query response message sent by the at least one third device, where the service query response message sent by the at least one third device is sent after the at least one third device determines to respond to the service query request message, and the service query response message sent by the at least one third device includes a public key derivative value of the at least one third device.

Optionally, the service query response message includes an authentication manner supported by the second device and/or a device type and role of the second device.

103. The first device obtains public key matching information.

104. After verifying that the public key matching information matches a public key derivative value, the first device sends communication information to the second device to communicate with the second device.

It should be noted that a manner in which the first device verifies whether the public key matching information matches the public key derivative value may be that the first device compares the received public key derivative value with a public key derivative value generated based on the public key matching information, to determine whether the two are the same, where if the two are the same, it is determined that the public key matching information matches the public key derivative value.

It should be noted that the public key matching information may be a public key or the public key derivative value of the second device. The public key derivative value is a mapping value generated based on the public key, and may be a public key hash value, a hash value of the public key and agreed plaintext information, or a truncated value of the public key (a part is truncated from the public key and is used as a derivative value), or a truncated value of a hash value generated based on the public key (a truncated value of a public key hash value or a truncated value of a hash value generated based on the public key and agreed plaintext information). The agreed plaintext information may be static plaintext information or may be dynamic plaintext information. Plaintext information may be a time synchronization value (TSF (time synchronization function) value), a time stamp (Time stamp value), an anchor master value (Anchor Mater), a master rank value (Master Rank), a random value, a nonce value, or a MAC address. The agreed plaintext information may be one or more types of the plaintext information, or all or a part thereof. For example, a part of the time stamp is selected as the plaintext information. The public key derivative value may be static or dynamic. If the public key derivative value is dynamic, the public key derivative value is generated by mapping the public key and dynamic information. If the public key derivative value is static, the public key derivative value is generated by mapping the public key and static information.

It should be noted that if the public key derivative value is static, the manner in which the first device verifies whether the public key matching information matches the public key derivative value may be that the first device compares the received public key derivative value with a public key derivative value generated based on the public key matching information and the agreed static plaintext information; or if the public key derivative value is dynamic, the manner in which the first device verifies whether the public key matching information matches the public key derivative value may be that the first device compares the received public key derivative value with a public key derivative value generated based on the public key matching information and the agreed dynamic plaintext information.

Specific matching may be as follows: When the public key derivative value of the second device is generated based on the public key of the second device and time stamp information of the second device, the first device receives a message sent by the second device, where the message includes the time stamp information of the second device. The first device generates the public key derivative value by using the public key matching information and the time stamp information of the second device, and compares the generated public key derivative value with the received public key derivative value of the second device, where if the values are the same, it is determined that the public key matching information matches the public key derivative value of the second device, that is, it is verified that the received public key derivative value of the second device is correct.

For another example, when the public key derivative value of the second device is generated based on the public key of the second device and time stamp information of an anchor master (such as a TSF value of the anchor master), the first device generates the public key derivative value by using the public key matching information and the time stamp information of the anchor master (the TSF value of the anchor master), and compares the generated public key derivative value with the received public key derivative value of the second device, where if the values are the same, it is determined that the public key matching information matches the public key derivative value of the second device, that is, it is verified that the received public key derivative value of the second device is correct.

The communication information may be one or more of an association request message association request, a reassociation request message reassociation request, an authentication request message authentication request, a data message data frame, an EAP (Extensible Authentication Protocol, Extensible Authentication Protocol) message, an action message action frame, a management message management frame, a beacon frame beacon, or the like.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a first device sends a second device a service query request message that includes service information that the first device needs to query; after determining, according to the service information, to respond to the service query request message, the second device sends a service query response message that includes a public key derivative value of the second device; after receiving the service query response message, the first device obtains public key matching information, and matches the public key matching information with the public key derivative value; and the first device communicates with the second device after the first device verifies that the public key matching information matches the public key derivative value. In this way, after determining to respond to the service query request message of the first device, the second device sends the public key derivative value of the second device to the first device, the first device verifies whether the public key derivative value of the second device matches the obtained public key matching information, and the first device communicates with the second device only after the two match each other. Therefore, a success in subsequent configuration of the first device and the second device is ensured, and a failure that is caused in the subsequent configuration process because the first device obtains an incorrect public key of the second device is avoided.

Another embodiment of the present invention provides an inter-device discovery method. The method is applied to a first device, and the first device belongs to a Wi-Fi device. As shown in FIG. 2, the method includes the following steps:
201. The first device receives a service query request message sent by a second device.

The service query request message includes service information that the second device needs to query.

Optionally, the service information includes a service name or a service name derivative value, and the service name derivative value may be a service name hash value.

Optionally, a service query response message includes an authentication manner supported by the first device and/or a device type and role of the first device.

202. The first device sends a service query response message to the second device when the first device determines to respond to the service query request message.

The service query response message includes a public key derivative value of the first device, so that the second device verifies whether obtained public key matching information is consistent with the public key derivative value.

It should be noted that a manner in which the first device verifies whether the public key matching information matches the public key derivative value may be that the first device compares the received public key derivative value with a public key derivative value generated based on the public key matching information, to determine whether the two are the same, where if the two are the same, it is determined that the public key matching information matches the public key derivative value.

Optionally, before the first device sends the service query response message to the second device when the first device determines to respond to the service query request message, the first device may further determine whether a service that can be provided by the first device is consistent with the service information. When the service that can be provided by the first device is consistent with the service information, the first device determines to respond to the service query request message.

It should be noted that a manner in which the first device may further determine whether the service that can be provided by the first device is consistent with the service information may be that the first device obtains, from the service information, a service name of a service that can be provided by the second device, and compares the service name with a service name of a service that the first device needs to query, to determine whether the two are consistent with each other.

Optionally, before the first device sends the service query response message to the second device when the first device determines to respond to the service query request message, the first device may further generate the public key derivative value according to a public key of the first device.

It should be noted that the public key derivative value may be a public key hash value, a hash value of the public key and agreed plaintext information, or a truncated value of the public key (a part is truncated from the public key and is used as a derivative value).

203. The first device communicates with the second device when the first device receives communication information sent by the second device.

It should be noted that the communication information may be one or more of an association request message, a reassociation request message, an authentication request message, a data message, an EAP message, an action message, a management message, or the like.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a second device sends a first device a service query request message that includes service information that the second device needs to query; after determining, according to the service information, to respond to the service query request message, the first device sends a service query response message that includes a public key derivative value of the first device; after receiving the service query response message, the second device obtains public key matching information, and matches the public key matching information with the public key derivative value; and the second device communicates with the first device after the second device verifies that the public key matching information matches the public key derivative value. In this way, after determining to respond to the service query request message of the second device, the first device sends the public key derivative value of the first device to the second device, the second device verifies whether the public key derivative value of the first device matches the obtained public key matching information, and the second device communicates with the first device only after the two match each other. Therefore, a success in subsequent configuration of the first device and the second device is ensured, and a failure that is caused in the subsequent configuration process because the first device obtains an incorrect public key of the first device is avoided.

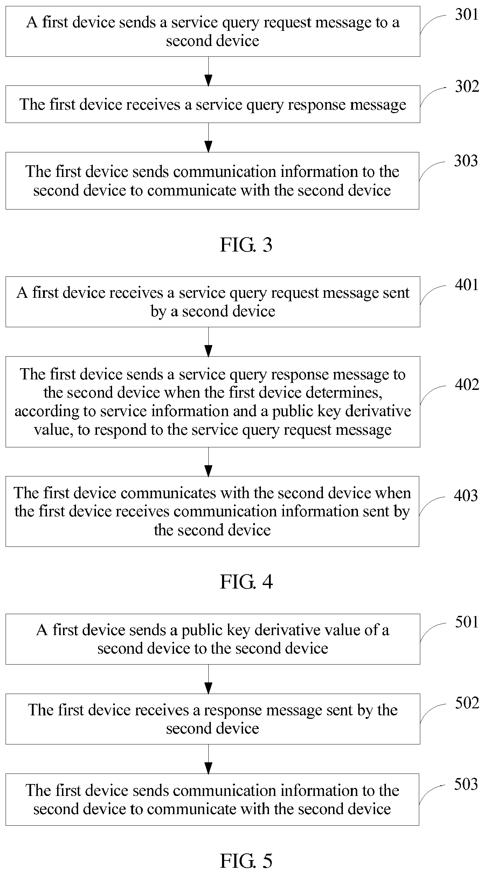

Another embodiment of the present invention provides an inter-device discovery method. The method is applied to a first device, and the first device belongs to a Wi-Fi device. As shown in FIG. 3, the method includes the following steps:
301. The first device sends a service query request message to a second device.

The service query request message includes service information that the first device needs to query and a public key derivative value of the second device, so that the second device determines, according to the service information and the public key derivative value, whether to respond to the service query request message.

Optionally, a manner in which the first device sends the service query request message to the second device may be that the first device sends the service query request message to target devices in a broadcast manner, where the target devices include the second device and at least one third device, and the service query request message includes the service information that the first device needs to query and the public key derivative value of the second device, so that the target devices determine, according to the service information and the public key derivative value, whether to respond to the service query request message.

Optionally, before the first device sends the service query request message to the second device, the first device may further obtain the service information and the public key derivative value of the second device.

Further, a manner in which the first device obtains the public key derivative value of the second device may be that the first device obtains a public key of the second device, and then generates the public key derivative value of the second device according to the public key.

Optionally, the public key derivative value is a public key hash value. The service information includes a service name or a service name derivative value.

It should be noted that the public key derivative value may be the public key hash value, a hash value of the public key and agreed plaintext information, or a truncated value of the public key (a part is truncated from the public key and is used as a derivative value).

302. The first device receives a service query response message.

The service query response message is sent by the second device after the second device determines to respond to the service query request message.

Optionally, the service query response message includes an authentication manner supported by the second device and/or a device type and role of the second device.

303. The first device sends communication information to the second device to communicate with the second device.

The communication information may be one or more of an association request message, a reassociation request message, an authentication request message, a data message, an EAP message, an action message, a management message, or the like.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a first device sends a second device a service query request message that includes an obtained public key derivative value of the second device and obtained service information; after determining, according to the service information and the public key derivative value, to respond to the service query request message, the second device sends a service query response message to the first device; and the first device communicates with the second device after receiving the service query response message. In this way, the first device sends the public key derivative value of the second device to the second device, the second device determines, according to the public key derivative value of the second device, to respond to the first device, and then the first device communicates with the second device. Therefore, a failure that is caused in the subsequent configuration process because the first device obtains an incorrect public key of the second device is avoided.

Another embodiment of the present invention provides an inter-device discovery method. The method is applied to a first device, and the first device belongs to a Wi-Fi device. As shown in FIG. 4, the method includes the following steps:
401. The first device receives a service query request message sent by a second device.

The service query request message includes service information that the second device needs to query and a public key derivative value of the first device.

Optionally, the service information includes a service name or a service name derivative value.

402. The first device sends a service query response message to the second device when the first device determines, according to service information and a public key derivative value, to respond to the service query request message.

Optionally, before the first device sends the service query response message to the second device when the first device determines, according to the service information and the public key derivative value, to respond to the service query request message, the first device may further determine whether a service that can be provided by the first device is consistent with the service information, and determine whether the public key derivative value matches a public key of the first device. Then, when the service that can be provided by the first device is consistent with the service information, and the public key derivative value matches the public key of the first device, the first device determines to respond to the service query request message.

It should be noted that a manner in which the first device determines whether the service that can be provided by the first device is consistent with the service information may be that the first device obtains, from the service information, a service name of a service that can be provided by the second device, and compares the service name with a service name of a service that the first device needs to query, to determine whether the two are consistent with each other. A manner in which the first device determines whether the public key derivative value matches the public key of the first device may be that the first device computes a public key from the public key derivative value, then determines whether the computed public key is consistent with the public key of the first device, where if the computed public key is consistent with the public key of the first device, it is determined that the two public keys match each other, or if the computed public key is inconsistent with the public key of the first device, it is determined that the two public keys do not match each other; or may be that the first device compares the received public key derivative value with a public key derivative value generated based on the public key, to determine whether the two are the same, where if the two are the same, it is determined that public key matching information matches the public key derivative value.

Optionally, the public key derivative value is a public key hash value.

Optionally, the service query response message includes an authentication manner supported by the first device and/or a device type and role of the first device.

It should be noted that the public key derivative value may be the public key hash value, a hash value of the public key and agreed plaintext information, or a truncated value of the public key (a part is truncated from the public key and is used as a derivative value).

403. The first device communicates with the second device when the first device receives communication information sent by the second device.

The communication information may be one or more of an association request message, a reassociation request message, an authentication request message, a data message, an EAP message, an action message, a management message, or the like.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a second device sends a first device a service query request message that includes an obtained public key derivative value of the first device and obtained service information; the first device sends a service query response message to the second device after determining, according to the service information and the public key derivative value, to respond to the service query request message; and the second device communicates with the first device after receiving the service query response message. In this way, the second device sends the public key derivative value of the first device to the first device, the first device determines, according to the public key derivative value of the first device, to respond to the second device, and then the second device communicates with the first device. Therefore, a failure that is caused in the subsequent configuration process because the second device obtains an incorrect public key of the first device is avoided.

Another embodiment of the present invention provides an inter-device discovery method. The method is applied to a first device, and the first device belongs to a Wi-Fi device. As shown in FIG. 5, the method includes the following steps:
501. The first device sends a public key derivative value of a second device to the second device.

The first device sends the public key derivative value of the second device to the second device, so that the second device determines, according to the public key derivative value, whether to return a response message to the first device.

Optionally, a specific manner in which the first device sends the public key derivative value of the second device to the second device may be that the first device sends the public key derivative value to target devices in a broadcast manner, so that the target devices determine, according to the public key derivative value, whether to return a response message to the first device, where the target devices include the second device and at least one third device.

Optionally, before the first device sends the public key derivative value of the second device to the second device, the first device may obtain the public key derivative value of the second device.

Specifically, a manner in which the first device obtains the public key derivative value of the second device is that the first device obtains a public key of the second device, and then the first device generates the public key derivative value of the second device according to the public key.

Optionally, the public key derivative value is a public key hash value.

It should be noted that the public key derivative value may be the public key hash value, a hash value of the public key and agreed plaintext information, or a truncated value of the public key (a part is truncated from the public key and is used as a derivative value).

502. The first device receives a response message sent by the second device.

The response message is sent by the second device after the second device determines to return a response message to the first device.

503. The first device sends communication information to the second device to communicate with the second device.

Optionally, before the first device sends the communication information to the second device to communicate with the second device, the first device may further send a service query request message to the second device, where the service query request message includes service information that the first device needs to query, so that the second device determines, according to the service information, whether to respond to the service query request message; and then the first device receives the service query response message sent by the second device, where the service query response message is sent by the second device after the second device determines to respond to the service query request message.

Optionally, before the first device sends the service query request message to the second device, the first device may further obtain the service information. The service information includes a service name or a service name derivative value.

Optionally, the response message includes an authentication manner supported by the second device and/or a device type and role of the second device.

The communication information may be one or more of an association request message, a reassociation request message, an authentication request message, a data message, an EAP message, an action message, a management message, or the like.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a first device sends a public key derivative value of a second device to the second device; the second device sends a response message to the first device after determining, according to the public key derivative value, to return a response message to the first device; and the first device communicates with the second device after the first device receives the response message sent by the second device. In this way, the first device sends the public key derivative value of the second device to the second device, and the first device communicates with the second device only after the second device performs determining according to the public key derivative value. Therefore, a failure that is caused in the subsequent configuration process because the first device obtains an incorrect public key of the second device is avoided.

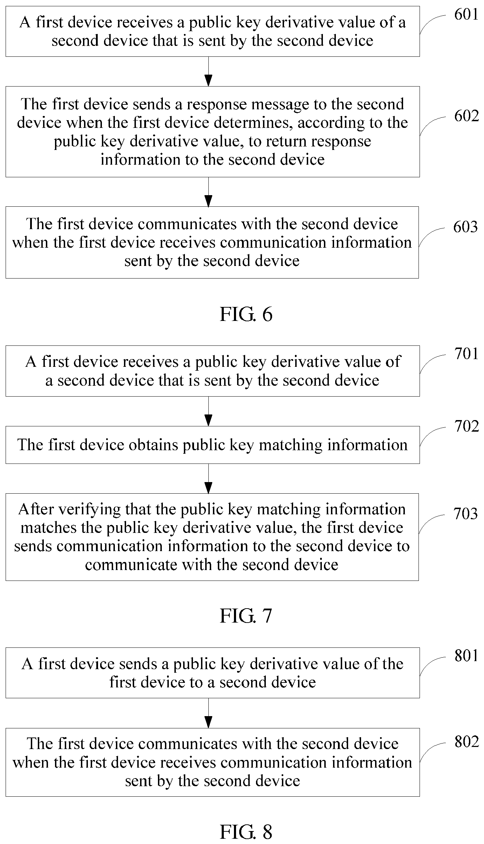

Another embodiment of the present invention provides an inter-device discovery method. The method is applied to a first device, and the first device belongs to a Wi-Fi device. As shown in FIG. 6, the method includes the following steps:
601. The first device receives a public key derivative value of a second device that is sent by the second device.

It should be noted that the public key derivative value may be a public key hash value, a hash value of a public key and agreed plaintext information, or a truncated value of a public key (a part is truncated from the public key and is used as a derivative value).

602. The first device sends a response message to the second device when the first device determines, according to the public key derivative value, to return response information to the second device.

603. The first device communicates with the second device when the first device receives communication information sent by the second device.

Optionally, before the first device sends the response message to the second device when the first device determines, according to the public key derivative value, to return response information to the second device, the first device may further determine whether the public key derivative value matches a public key of the first device, where when the public key derivative value matches the public key of the first device, the first device determines to return response information to the second device.

Optionally, before the first device communicates with the second device when the first device receives the communication information sent by the second device, the first device may receive a service query request message sent by the second device, where the service query request message includes service information that the second device needs to query; and the first device sends a service query response message to the second device when the first device determines, according to the service information, to respond to the service query request message.

Optionally, before the first device sends the service query response message to the second device when the first device determines, according to the service information, to respond to the service query request message, the first device may determine whether a service that can be provided by the first device is consistent with the service information, where when the service that can be provided by the first device is consistent with the service information, the first device determines to respond to the service query request message.

It should be noted that a manner in which the first device determines whether the service that can be provided by the first device is consistent with the service information may be that the first device obtains, from the service information, a service name of a service that can be provided by the second device, and compares the service name with a service name of the service that can be provided by the first device, to determine whether the two are consistent with each other. A manner in which the first device determines whether the public key derivative value matches the public key of the first device may be that the first device computes the public key from the public key derivative value, then determines whether the computed public key is consistent with the public key of the first device, where if the computed public key is consistent with the public key of the first device, it is determined that the two public keys match each other, or if the computed public key is inconsistent with the public key of the first device, it is determined that the two public keys do not match each other; or may be that the first device compares the received public key derivative value with a public key derivative value generated based on the public key, to determine whether the two are the same, where if the two are the same, it is determined that public key matching information matches the public key derivative value.

Optionally, the public key derivative value is a public key hash value. The service information includes the service name or a service name derivative value. The service query response message includes an authentication manner supported by the first device and/or a device type and role of the first device.

The communication information may be one or more of an association request message, a reassociation request message, an authentication request message, a data message, an EAP message, an action message, a management message, or the like.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a second device sends a public key derivative value of a first device to the first device; the first device sends a response message to the second device after determining, according to the public key derivative value, to return a response message to the second device; and the second device communicates with the first device after the second device receives the response message sent by the first device. In this way, the second device sends the public key derivative value of the first device to the first device, and the second device communicates with the first device only after the second device performs determining according to the public key derivative value. Therefore, a failure that is caused in the subsequent configuration process because the second device obtains an incorrect public key of the first device is avoided.

Another embodiment of the present invention provides an inter-device discovery method. The method is applied to a first device, and the first device belongs to a Wi-Fi device. As shown in FIG. 7, the method includes the following steps:
701. The first device receives a public key derivative value of a second device that is sent by the second device.
702. The first device obtains public key matching information.
703. After verifying that the public key matching information matches the public key derivative value, the first device sends communication information to the second device to communicate with the second device.

Optionally, before the first device sends, after verifying that the public key matching information matches the public key derivative value, the communication information to the second device to communicate with the second device, the first device may receive a service query request message sent by the second device, where the service query request message includes service information that can be provided by the second device.

Further, that the first device sends, after verifying that the public key matching information matches the public key derivative value, communication information to the second device to communicate with the second device is specifically that the first device sends, after verifying that the public key matching information matches the public key derivative value and whether a service that the first device needs to query is consistent with the service information, the communication information to the second device to communicate with the second device.

It should be noted that a manner in which the first device determines whether the service that the first device needs to query is consistent with the service information may be that the first device obtains, from the service information, a service name of the service that can be provided by the second device, and compares the service name with a service name of the service that the first device needs to query, to determine whether the two are consistent with each other. A manner in which the first device determines whether the public key derivative value matches the public key matching information obtained by the first device may be separately computing public keys from the public key derivative value and the public key matching information, then determining whether the two computed public keys are consistent with each other, where if the two computed public keys are consistent with each other, it is determined that the two public keys match each other, or if the two computed public keys are inconsistent with each other, it is determined that the two public keys do not match each other.

Optionally, the public key derivative value is a public key hash value.

Optionally, before the first device receives the public key derivative value of the second device that is sent by the second device, the first device may synchronize with the second device.

It should be noted that the public key matching information may be a public key or a public key derivative value of the second device. The public key derivative value may be a public key hash value, a hash value of the public key and agreed plaintext information, or a truncated value of the public key (a part is truncated from the public key and is used as a derivative value).

The communication information may be one or more of an association request message, a reassociation request message, an authentication request message, a data message, an EAP message, an action message, a management message, or the like.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a second device sends a public key derivative value of the second device to a first device; after obtaining public key matching information, the first device verifies whether the public key matching information matches the public key derivative value; and the first device communicates with the second device after the two match each other. In this way, the first device communicates with the second device only after verifying whether the obtained public key matching information matches the public key derivative value. Therefore, a failure that is caused in the subsequent configuration process because the first device obtains an incorrect public key of the second device is avoided.

Another embodiment of the present invention provides an inter-device discovery method. The method is applied to a first device, and the first device belongs to a Wi-Fi device. As shown in FIG. 8, the method includes the following steps:
801. The first device sends a public key derivative value of the first device to a second device.

The first device sends the public key derivative value of the first device to the second device, so that the second device verifies whether the public key derivative value matches public key matching information obtained by the second device.

802. The first device communicates with the second device when the first device receives communication information sent by the second device.

Optionally, before the first device communicates with the second device, the first device may send a service query request message to the second device, where the service query request message is service information that can be provided by the first device, so that the second device determines whether the service information is consistent with a service that the first device needs to query.

Optionally, before the first device sends the public key derivative value of the first device to the second device, the first device may generate the public key derivative value according to a public key of the first device.

Optionally, the public key derivative value is a public key hash value.

Optionally, before the first device sends the public key derivative value of the first device to the second device, the first device may synchronize with the second device.

The communication information may be one or more of an association request message, a reassociation request message, an authentication request message, a data message, an EAP message, an action message, a management message, or the like.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a first device sends a public key derivative value of the first device to a second device; after obtaining public key matching information, the second device verifies whether the public key matching information matches the public key derivative value; and the second device communicates with the first device after the two match each other. In this way, the second device communicates with the first device only after verifying whether the obtained public key matching information matches the public key derivative value. Therefore, a failure that is caused in the subsequent configuration process because the second device obtains an incorrect public key of the first device is avoided.

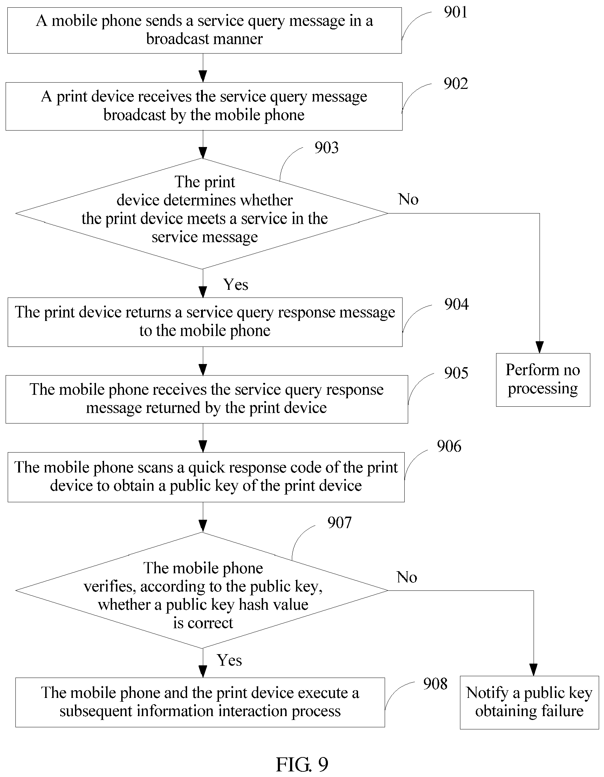

Another embodiment of the present invention provides an inter-device discovery method. The method is applied to a Wi-Fi device. With reference to a WFDS (Wi-Fi Direct Services, Wi-Fi Direct Services) specification, a discovery process of a mobile phone and a print device is used as an example. As shown in FIG. 9, the method includes the following steps:
901. The mobile phone sends a service query message in a broadcast manner.

The service query message is a WFDS message, and the service query message sent by the mobile phone includes a service name or a service name hash value, and a MAC address of the mobile phone.

It should be noted that before sending the service query message in a broadcast manner, the mobile phone may obtain a to-be-executed service by means of a specific operation of a user. The user may select or enter the to-be-executed service on a device UI (User Interface, user interface), for example, one or more of printing, sending, sharing, playing, displaying, association, configuring an AP (Access Point, access point), replacing an AP, adding an AP, adding a device to a network, configuring a current device, connecting to a current device, connecting a current device to another device, supporting being configured, supporting being possessed, being not configured currently but being configurable, discovering an AP, or scanning to discover a device that supports WPS (DPP) configuration. The mobile phone may obtain service information by obtaining the to-be-executed service, for example, extract the service information from the to-be-executed service. For example, if the to-be-executed service obtained by the mobile phone is "sending", the service information obtained by the mobile phone is "sending". A device that receives the service query message makes a response if the device that receives the service query message supports corresponding service information, for example, one or more of printing, sending, sharing, playing, displaying, association, configuring an AP (Access Point, access point), replacing an AP, adding an AP, adding a device to a network, configuring a current device, connecting to a current device, connecting a current device to another device, supporting being configured, supporting being possessed, being not configured currently but being configurable, discovering an AP, or scanning to discover a device that supports WPS (DPP) configuration.

For example, the mobile phone queries a service: adding a device to a network, and if the device that receives the service query message supports being added, the device makes a response; the mobile phone queries a service: configuring a current device, and if the device that receives the service query message supports being configured, the device makes a response, where the mobile phone uses configuring a current device as service information and adds the service information to the service query message; the mobile phone queries a service: connecting to a current device, and if the device that receives the service query message supports being connected, the device makes a response, where the mobile phone uses connecting to a current device as service information and adds the service information to the service query message; the mobile phone queries a service: connecting a current device to another device, and if the device that receives the service query message supports being connected to the another device, the device makes a response; the mobile phone announces a service: supporting being configured, and if the device that receives the service query message supports a configuration function, the device makes a response; the mobile phone announces a service: being not configured currently but being configurable, and if the device that receives the service query message supports a configuration function, the device makes a response; or the mobile phone announces a service: supporting being possessed, and if the device that receives the service query message supports a possession function, the device makes a response. For another example, a device performs service discovery. For example, if the mobile phone performs a service query, and a to-be-queried service is discovering an AP, the mobile phone device sends a probe request message to indicate a need to query an AP device. If a device that receives the message is an AP, it indicates that the device supports an AP service, and the device makes a response. A to-be-queried service is discovering a P2P device, the mobile phone adds a P2P IE to a service query message to indicate a query for a device that supports P2P, and the P2P IE is used as to-be-queried service information. If a device that receives the message supports the P2P, the device makes a response, and optionally adds the P2P IE to a response message. For example, if a to-be-queried service is discovering a device that supports WPS (WiFi protected setup, WiFi protect setup) configuration (or supports DPP (Device Provisioning Protocol) configuration), the mobile phone device adds a WPS IE (or a DPP IE) to a to-be-sent service query message to indicate a need to query a device that supports the WPS (DPP) configuration, and the WPS IE (or the DPP IE) is used as to-be-queried service information. If a device that receives the message supports the WPS (or DPP) configuration, the device makes a response, and optionally adds the WPS IE (or the DPP IE) to a response message. In addition, it is noted that a public key derivative value may be included in the service query message, and may be specifically included in the WPS IE (or the DPP IE). Alternatively, the service query message/response message may be in a format of a probe request message, an action message, an EAP message, or another message.

In this embodiment of the present invention, printing a file by using the mobile phone is used as an example.

902. The print device receives the service query message broadcast by the mobile phone.

The print device learns a service needed by the mobile phone and the MAC address of the mobile phone from the service query message broadcast by the mobile phone.

It should be noted that any device within a range that can be reached by the message broadcast by the mobile phone can receive the message broadcast by the mobile phone.

903. The print device determines whether the print device meets a service in the service message, where if the print device meets the service in the service message, step 904 is executed, or if the print device does not meet the service in the service message, no processing is performed.

904. The print device returns a service query response message to the mobile phone.

The service query response message is a WFDS message, and includes a service name, a public key hash value (public key hash) of the print device, and an authentication manner supported by the print device, for example, QR-code (Quick Response-code, quick response code) authentication or PIN (Personal Identifier Number, personal identification number) authentication. A sending address of the service query response message is a MAC address of the print device.

It should be noted that the public key hash value of the print device is a value obtained by the print device by performing a one-way operation on a public key of the print device, for example, generated by means of a hash operation. The hash operation is used as an example in this embodiment of the present invention, and the hash operation is performed on the public key to generate the public key hash value. Alternatively, another algorithm may be used.

It should be noted that if the print device is an AP device, the service query response message further carries an SSID (service set identifier, a network name of an AP) to indicate that the print device is an AP device; or if the print device is a P2P (Peer-to-Peer, peer-to-peer) device or a common STA (station, station) device, the service query response message does not carry an SSID. The SSID is used so that the mobile phone can obtain role information of the print device, or the print device directly adds device role information of the print device to the service query response message returned by the print device, for example, an AP, a STA, a GO (group owner, group owner), a client client, a peer-to-peer device P2P device that falls beyond a group group, a to-be-configured device (enrollee or connector), or a configuration device (configurator or introducers).

905. The mobile phone receives the service query response message returned by the print device.

The mobile phone receives the service query response message returned by the print device, so as to obtain information such as the MAC address and the public key hash value of the print device.

906. The mobile phone scans a quick response code of the print device to obtain a public key of the print device.

The mobile phone obtains the public key of the print device in the quick response code by scanning the quick response code of the print device.

It should be noted that the public key of the print device in the quick response code is public key matching information.

907. The mobile phone verifies, according to the public key, whether a public key hash value is correct, where if the mobile phone verifies that the public key hash value is correct, step 908 is executed, or if the mobile phone verifies that the public key hash value is incorrect, a public key obtaining failure is notified.

A manner in which the mobile phone performs verification on the public key hash value according to the public key may be: first performing a hash operation on the public key obtained from the quick response code, and then comparing a result of the operation with the received public key hash value. If the result of the operation is consistent with the received public key hash value, it indicates that the public key obtained by the mobile phone is the public key of the print device, and step 907 is executed; or if the result of the operation is inconsistent with the received public key hash value, it indicates that the public key obtained by the mobile phone is not the public key of the print device, and the public key obtaining failure is notified.

908. The mobile phone and the print device execute a subsequent information interaction process.

The subsequent information interaction process is that the mobile phone and the print device complete configuration. Because the mobile phone obtains the MAC address of the print device in step 904, the mobile phone can directly send a message to the print device, and the print device can directly send a message to the mobile phone. For example, the mobile phone initiates a provision discovery request (Provision Discovery Request) to the print device, where the provision discovery request includes a connection capability of the mobile phone: The mobile phone can be used as a GO, a client, or a new group (can set up a new group); and the print device returns a provision discovery response (Provision Discovery Response), where the provision discovery response includes a connection capability of the print device: The print device can be used as one of a GO, a client, or a new group.

It should be noted that in this embodiment of the present invention, alternatively, implementation may be performed with reference to a GAS message instead of the WFDS specification, that is, the messages sent in step 910 and step 914 are GAS (Generic advertisement service, generic advertisement service) messages.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a first device sends a second device a service query message that includes service information that the first device needs to query, and then receives a response message that is sent by the second device and that includes a public key hash value of the second device, where the response message is sent by the second device after the second device determines that a service provided by the second device is consistent with the service information; the first device obtains a public key of the second device, and verifies, according to the public key, whether the public key hash value is correct; and the first device communicates with the second device when verifying that the public key hash value is correct. In this way, after service information of the first device and the second device is consistent with each other, it is determined, by performing verification on consistency between the public key hash value of the second device and the obtained public key of the second device, whether the first device correctly selects a second device. Therefore, a failure that is caused in the subsequent configuration process because the first device obtains an incorrect public key of the second device is avoided.

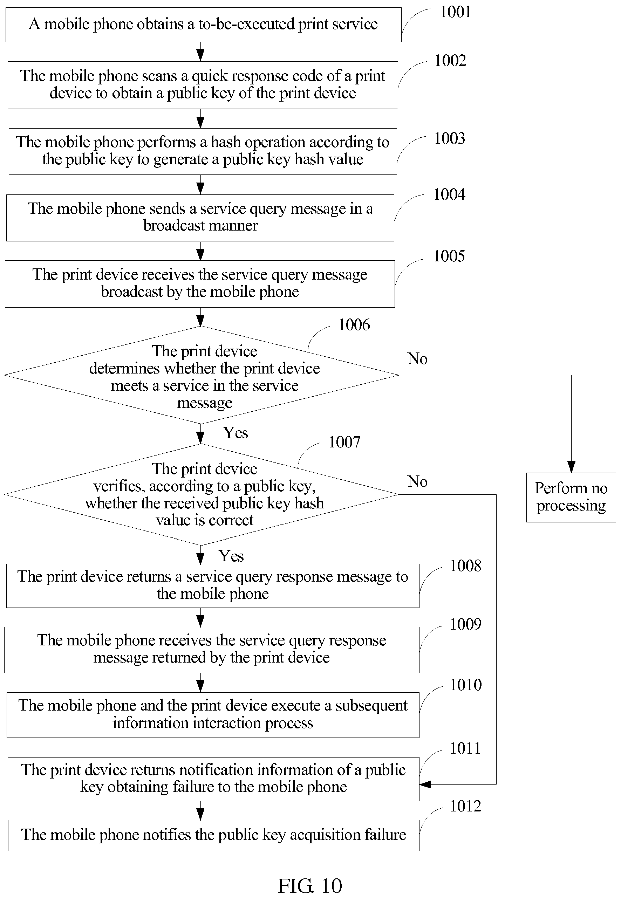

Another embodiment of the present invention provides an inter-device discovery method. The method is applied to a Wi-Fi device. With reference to a GAS message, a discovery process of a mobile phone and a print device is used as an example. As shown in FIG. 10, the method includes the following steps:
1001. The mobile phone obtains a to-be-executed print service.

Before sending a service query message in a broadcast manner, the mobile phone may obtain the to-be-executed service by means of a specific operation of a user. The user may select or enter the to-be-executed service on a device UI (User Interface, user interface), for example, one or more of printing, sending, sharing, playing, displaying, association, configuring an AP, replacing an AP, adding an AP, adding a device to a network, configuring a current device, connecting to a current device, connecting a current device to another device, supporting being configured, supporting being possessed, or being not configured currently but being configurable. The mobile phone may obtain service information by obtaining the to-be-executed service, for example, extract the service information from the to-be-executed service. For example, if the to-be-executed service obtained by the mobile phone is "sending", the service information obtained by the mobile phone is "sending". In this embodiment of the present invention, printing a file by using the mobile phone is used as an example.

1002. The mobile phone scans a quick response code of the print device to obtain a public key of the print device.

The quick response code of the print device includes the public key of the print device, and the mobile phone obtains, by scanning the quick response code of the print device, the public key included in the quick response code of the print device.

1003. The mobile phone performs a hash operation according to the public key to generate a public key hash value.

The public key hash value of the print device is generated by the mobile phone by performing the hash operation on the public key of the print device. The hash operation is used as an example in this embodiment of the present invention, and the hash operation is performed on the public key to generate the public key hash value. Alternatively, another algorithm may be used.

It should be noted that alternatively, step 1001 may be executed after step 1002 or step 1003.

1004. The mobile phone sends a service query message in a broadcast manner.

The service query message is in a form of a GAS request message, and includes service query information and the public key hash value of the print device.

1005. The print device receives the service query message broadcast by the mobile phone.

The service query message includes the service query information and the public key hash value generated in step 1003, and the service query message sent by the mobile phone includes a service hash value (a service name hash value) and a MAC address of the mobile phone.

It should be noted that any device within a range that can be reached by the message broadcast by the mobile phone can receive the message broadcast by the mobile phone.

1006. The print device determines whether the print device meets a service in the service message, where if the print device meets the service in the service message, step 1007 is executed, or if the print device does not meet the service in the service message, no processing is performed.

The print device compares a service that can be provided by the print device with a service name in the service query information received in step 1005, to determine whether the print device meets the service in the service message. If the print device meets the service in the service message, step 1007 is executed; or if the print device does not meet the service in the service message, no processing is performed.

1007. The print device verifies, according to a public key, whether the received public key hash value is correct, where if the print device verifies that the received public key hash value is correct, step 1008 is executed, or if the print device verifies that the received public key hash value is incorrect, step 1011 is executed.

A manner in which the print device verifies, according to the public key, whether the received public key hash value is correct may be that after performing the hash operation according to the public key of the print device to obtain a result of the operation, the print device compares the result of the operation with the public key hash value received in step 1005. If the two are consistent with each other, it indicates that the public key of the print device that is obtained by the mobile phone is correct, and step 1008 is executed; or if the two are inconsistent with each other, it indicates that the public key of the print device that is obtained by the mobile phone is correct, and step 1011 is executed.

1008. The print device returns a service query response message to the mobile phone.

The service query response message is a WFDS message, and includes the service name, a public key hash value of the print device, and an authentication manner supported by the print device, for example, QR-code (Quick Response-code, quick response code) authentication or PIN (Personal Identifier Number, personal identification number) authentication. A sending address of the service query response message is a MAC address of the print device.

It should be noted that if the print device is an AP device, the service query response message further carries an SSID (service set identifier, a network name of an AP) to indicate that the print device is an AP device; or if the print device is a P2P device or a common STA device, the service query response message does not carry an SSID. The SSID is used so that the mobile phone can obtain role information of the print device, or the print device directly adds device role information of the print device to the service query response message returned by the print device, for example, an AP, a STA, a GO (group owner), a client, or a P2P device that falls beyond a group.

1009. The mobile phone receives the service query response message returned by the print device.

The mobile phone receives the service query response message returned by the print device, so as to obtain information such as the MAC address and the public key hash value of the print device.

1010. The mobile phone and the print device execute a subsequent information interaction process.

It should be noted that after this step is executed, no subsequent step needs to be executed.

1011. The print device returns notification information of a public key obtaining failure to the mobile phone.

When verifying that the received public key hash value is incorrect, the print device sends the notification information to the mobile phone to notify the mobile phone that the obtained public key of the print device is incorrect and public key obtaining fails.

1012. The mobile phone notifies the public key obtaining failure.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, according to an inter-device discovery method and apparatus provided in a second aspect of the embodiments of the present invention, in the present invention, a first device sends a second device a service query message that includes service information that the first device needs to query and a public key hash value of the second device, and then receives a response message sent by the second device, where the response message is sent by the second device after the second device determines that a service provided by the second device is consistent with the service information and verifies that the public key hash value is correct; and the first device communicates with the second device according to the response message. In this way, when sending the service query information, the first device also sends the public key hash value of the second device, so that when determining that service information is consistent with each other, the second device verifies, according to a public key, that the public key hash value is correct, and returns the response message to the first device only when the public key hash value is correct; and the first device communicates with the second device after receiving the response message. Therefore, a failure that is caused in the subsequent configuration process because the first device obtains an incorrect public key of the second device is avoided.

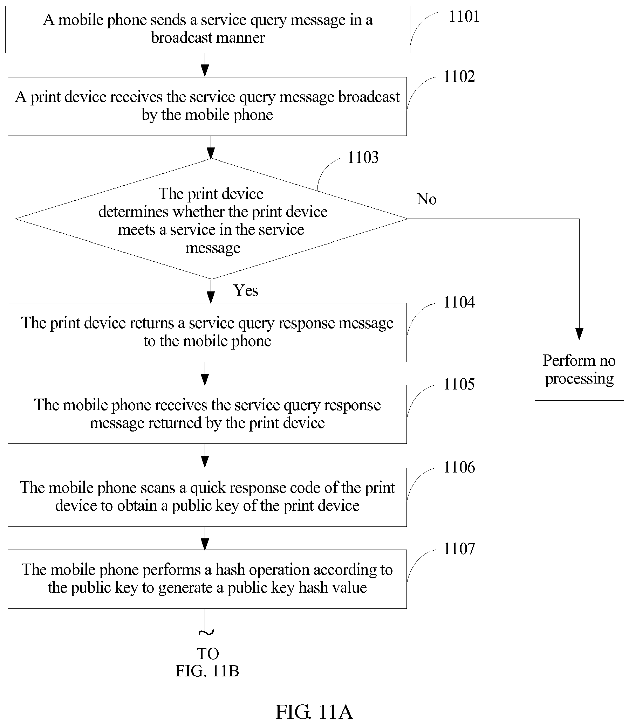

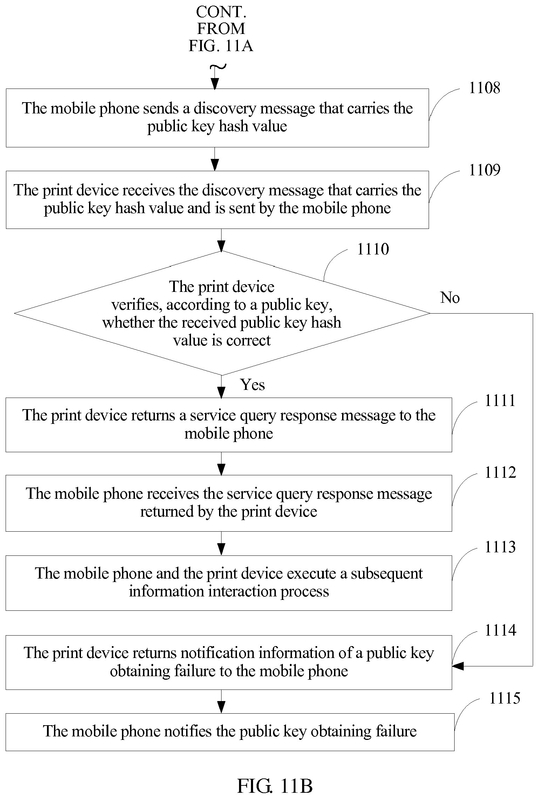

Another embodiment of the present invention provides an inter-device discovery method. The method is applied to a Wi-Fi device. A discovery process of a mobile phone and a print device is used as an example. As shown in FIG. 11A and FIG. 11B, the method includes the following steps:
1101. The mobile phone sends a service query message in a broadcast manner.

The service query message sent by the mobile phone includes a service hash value (a service name (service name) hash value) and a MAC address of the mobile phone.

It should be noted that before sending the service query message in a broadcast manner, the mobile phone may obtain a to-be-executed service by means of a specific operation of a user. The user may select or enter the to-be-executed service on a device UI (User Interface, user interface), for example, one or more of printing, sending, sharing, playing, displaying, association, configuring an AP, replacing an AP, adding an AP, adding a device to a network, configuring a current device, connecting to a current device, connecting a current device to another device, supporting being configured, supporting being possessed, or being not configured currently but being configurable. The mobile phone may obtain service information by obtaining the to-be-executed service, for example, extract the service information from the to-be-executed service. For example, if the to-be-executed service obtained by the mobile phone is "sending", the service information obtained by the mobile phone is "sending". In this embodiment of the present invention, printing a file by using the mobile phone is used as an example.

1102. The print device receives the service query message broadcast by the mobile phone.

It should be noted that any device within a range that can be reached by the message broadcast by the mobile phone can receive the message broadcast by the mobile phone.

1103. The print device determines whether the print device meets a service in the service message, where if the print device meets the service in the service message, step 1104 is executed, or if the print device does not meet the service in the service message, no processing is performed.

The print device compares a service that can be provided by the print device with a service name in the service query information received in step 1102, to determine whether the print device meets the service in the service message. If the print device meets the service in the service message, step 1104 is executed; or if the print device does not meet the service in the service message, no processing is performed.

1104. The print device returns a service query response message to the mobile phone.

The service query response message includes a service name and an authentication manner supported by the print device, for example, QR-code (Quick Response-code, quick response code) authentication or PIN (Personal Identifier Number, personal identification number) authentication. A sending address of the service query response message is a MAC address of the print device.

It should be noted that if the print device is an AP device, the service query response message further carries an SSID (service set identifier, a network name of an AP) to indicate that the print device is an AP device; or if the print device is a P2P device or a common STA device, the service query response message does not carry an SSID. The SSID is used so that the mobile phone can obtain role information of the print device, or the print device directly adds device role information of the print device to the service query response message returned by the print device, for example, an AP, a STA, a GO (group owner), a client, or a P2P device that falls beyond a group.

1105. The mobile phone receives the service query response message returned by the print device.

The mobile phone receives the service query response message returned by the print device, so as to obtain information such as the MAC address and a public key hash value of the print device.

1106. The mobile phone scans a quick response code of the print device to obtain a public key of the print device.

The mobile phone obtains the public key of the print device in the quick response code by scanning the quick response code of the print device.

1107. The mobile phone performs a hash operation according to the public key to generate a public key hash value.

It should be noted that the public key hash value of the print device is generated by the mobile phone by performing the hash operation on the public key of the print device. The hash operation is used as an example in this embodiment of the present invention, and the hash operation is performed on the public key to generate the public key hash value. Alternatively, another algorithm may be used.

1108. The mobile phone sends a discovery message that carries the public key hash value.

The discovery message includes service information, and may be sent in a broadcast manner, or may be sent only to a print device, where a MAC address of the print device is set as the MAC address of the foregoing device that responds to a service query.

1109. The print device receives the discovery message that carries the public key hash value and is sent by the mobile phone.

1110. The print device verifies, according to a public key, whether the received public key hash value is correct, where if the print device verifies that the received public key hash value is correct, step 1111 is executed, or if the print device verifies that the received public key hash value is incorrect, step 1114 is executed.

A manner in which the print device verifies, according to the public key, whether the received public key hash value is correct may be that after performing the hash operation according to the public key of the print device to obtain a result of the operation, the print device compares the result of the operation with the public key hash value received in step 305. If the two are consistent with each other, it indicates that the public key of the print device that is obtained by the mobile phone is correct, and step 1111 is executed; or if the two are inconsistent with each other, it indicates that the public key of the print device that is obtained by the mobile phone is correct, and step 1114 is executed.

1111. The print device returns a service query response message to the mobile phone.

The service query response message is a WFDS message, and includes the service name, the public key hash value of the print device, and the authentication manner supported by the print device, for example, the QR-code (Quick Response-code, quick response code) authentication or the PIN (Personal Identifier Number, personal identification number) authentication. A sending address of the service query response message is the MAC address of the print device.

It should be noted that if the print device is an AP device, the service query response message further carries the SSID (service set identifier, the network name of the AP) to indicate that the print device is an AP device; or if the print device is a P2P device or a common STA device, the service query response message does not carry the SSID. The SSID is used so that the mobile phone can obtain the role information of the print device, or the print device directly adds the device role information of the print device to the service query response message returned by the print device, for example, an AP, a STA, a GO (group owner), a client, or a P2P device that falls beyond a group.

1112. The mobile phone receives the service query response message returned by the print device.

The mobile phone receives the service query response message returned by the print device, so as to obtain the information such as the MAC address and the public key hash value of the print device.

1113. The mobile phone and the print device execute a subsequent information interaction process.

It should be noted that after this step is executed, no subsequent step needs to be executed.

1114. The print device returns notification information of a public key obtaining failure to the mobile phone.

1115. The mobile phone notifies the public key obtaining failure.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, according to an inter-device discovery method and apparatus provided in a second aspect of the embodiments of the present invention, in the present invention, a first device sends a second device a service query message that includes service information that the first device needs to query and a public key hash value of the second device, and then receives a response message sent by the second device, where the response message is sent by the second device after the second device determines that a service provided by the second device is consistent with the service information and verifies that the public key hash value is correct; and the first device communicates with the second device according to the response message. In this way, when sending the service query information, the first device also sends the public key hash value of the second device, so that when determining that service information is consistent with each other, the second device verifies, according to a public key, that the public key hash value is correct, and returns the response message to the first device only when the public key hash value is correct; and the first device communicates with the second device after receiving the response message. Therefore, a failure that is caused in the subsequent configuration process because the first device obtains an incorrect public key of the second device is avoided.

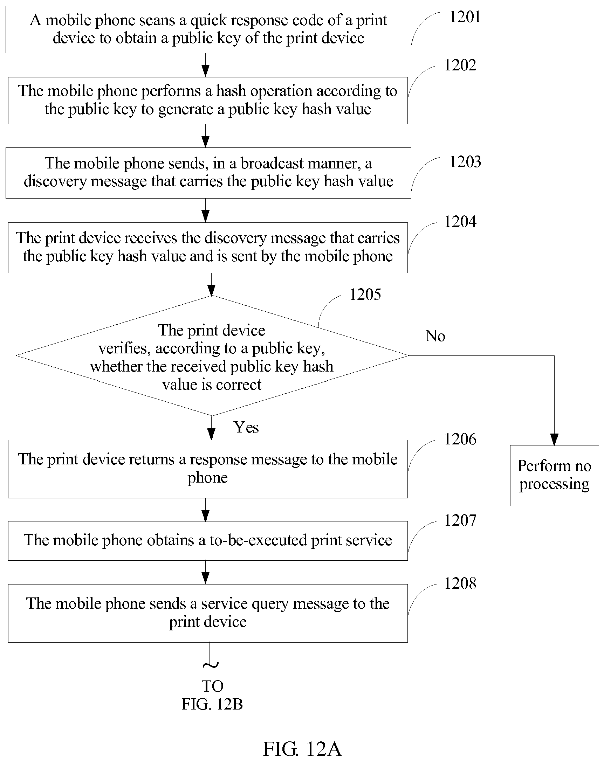

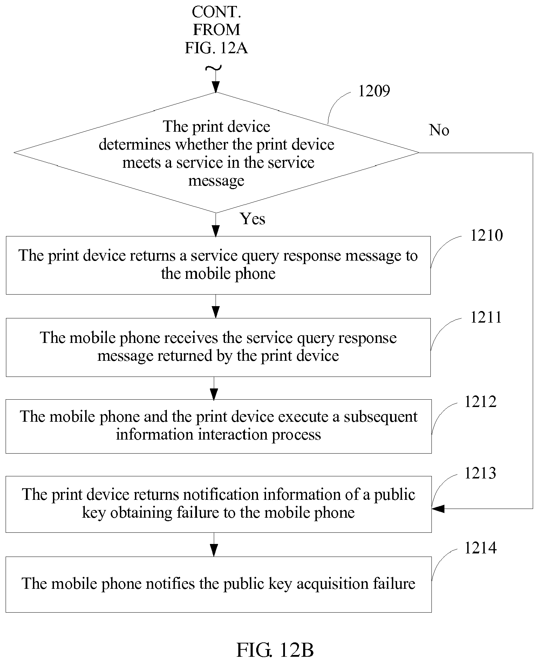

Another embodiment of the present invention provides an inter-device discovery method. The method is applied to a Wi-Fi device. A discovery process of a mobile phone and a print device is used as an example. As shown in FIG. 12A and FIG. 12B, the method includes the following steps:

1201. The mobile phone scans a quick response code of the print device to obtain a public key of the print device.

The mobile phone obtains the public key of the print device in the quick response code by scanning the quick response code of the print device.

1202. The mobile phone performs a hash operation according to the public key to generate a public key hash value.

It should be noted that the public key hash value of the print device is generated by the print device by performing the hash operation on the public key of the print device. The hash operation is used as an example in this embodiment of the present invention, and the hash operation is performed on the public key to generate the public key hash value. Alternatively, another algorithm may be used.

1203. The mobile phone sends, in a broadcast manner, a discovery message that carries the public key hash value.

1204. The print device receives the discovery message that carries the public key hash value and is sent by the mobile phone.

1205. The print device verifies, according to a public key, whether the received public key hash value is correct, where if the print device verifies that the received public key hash value is correct, step 1206 is executed, or if the print device verifies that the received public key hash value is incorrect, no processing is performed.

A manner in which the print device verifies, according to the public key, whether the received public key hash value is correct may be that after performing the hash operation according to the public key of the print device to obtain a result of the operation, the print device compares the result of the operation with the public key hash value received in step 305. If the two are consistent with each other, it indicates that the public key of the print device that is obtained by the mobile phone is correct, and step 1206 is executed; or if the two are inconsistent with each other, it indicates that the public key of the print device that is obtained by the mobile phone is correct, and no processing is performed.

1206. The print device returns a response message to the mobile phone.

The response message includes a MAC address of the print device.

1207. The mobile phone obtains a to-be-executed print service.

It should be noted that before sending a service query message in a broadcast manner, the mobile phone may obtain the to-be-executed service by means of a specific operation of a user. The user may select or enter the to-be-executed service on a device UI (User Interface, user interface), for example, one or more of printing, sending, sharing, playing, displaying, association, configuring an AP, replacing an AP, adding an AP, adding a device to a network, configuring a current device, connecting to a current device, connecting a current device to another device, supporting being configured, supporting being possessed, or being not configured currently but being configurable. The mobile phone may obtain service information by obtaining the to-be-executed service, for example, extract the service information from the to-be-executed service. For example, if the to-be-executed service obtained by the mobile phone is "sending", the service information obtained by the mobile phone is "sending". In this embodiment of the present invention, printing a file by using the mobile phone is used as an example.

1208. The mobile phone sends a service query message to the print device.

1209. The print device determines whether the print device meets a service in the service message, where if the print device meets the service in the service message, step 1210 is executed, or if the print device does not meet the service in the service message, step 1213 is executed.

1210. The print device returns a service query response message to the mobile phone.

1211. The mobile phone receives the service query response message returned by the print device.

The mobile phone receives the service query response message returned by the print device, so as to obtain information such as the MAC address and the public key hash value of the print device.

1212. The mobile phone and the print device execute a subsequent information interaction process.

It should be noted that after this step is executed, no subsequent step needs to be executed.

1213. The print device returns notification information of a public key obtaining failure to the mobile phone.

1214. The mobile phone notifies the public key obtaining failure.

It should be noted that when the mobile phone does not need a service discovery process, but only needs to discover a device that meets the public key hash value, step 1207 and step 1208 do not need to be executed.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, according to an inter-device discovery method and apparatus provided in a second aspect of the embodiments of the present invention, in the present invention, a first device sends a second device a service query message that includes service information that the first device needs to query and a public key hash value of the second device, and then receives a response message sent by the second device, where the response message is sent by the second device after the second device determines that a service provided by the second device is consistent with the service information and verifies that the public key hash value is correct; and the first device communicates with the second device according to the response message. In this way, when sending the service query information, the first device also sends the public key hash value of the second device, so that when determining that service information is consistent with each other, the second device verifies, according to a public key, that the public key hash value is correct, and returns the response message to the first device only when the public key hash value is correct; and the first device communicates with the second device after receiving the response message. Therefore, a failure that is caused in the subsequent configuration process because the first device obtains an incorrect public key of the second device is avoided.

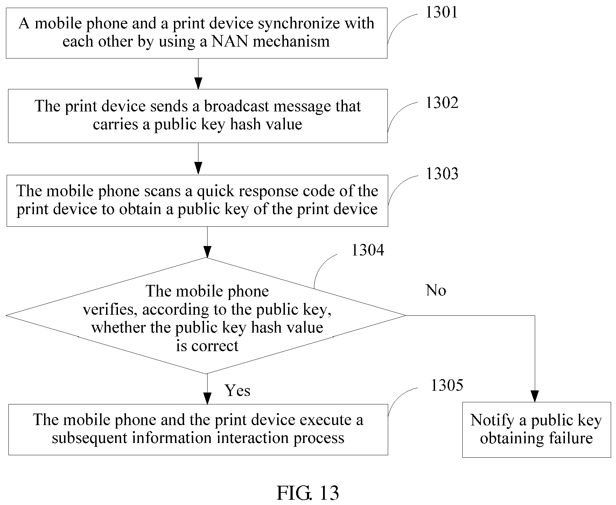

Another embodiment of the present invention provides an inter-device discovery method. The method is applied to a Wi-Fi device. A discovery process of a mobile phone and a print device is used as an example, and the mobile phone and the print device do not need to execute a service discovery process. As shown in FIG. 13, the method includes the following steps:

1301. The mobile phone and the print device synchronize with each other by using a NAN (Neighbor Awareness Networking, neighbor awareness networking) mechanism.

1302. The print device sends a broadcast message that carries a public key hash value.

The broadcast message carries a MAC address of the print device.

1303. The mobile phone scans a quick response code of the print device to obtain a public key of the print device.

The mobile phone obtains the public key of the print device in the quick response code by scanning the quick response code of the print device.

1304. The mobile phone verifies, according to the public key, whether the public key hash value is correct, where if the mobile phone verifies that the public key hash value is correct, step 1305 is executed, or if the mobile phone verifies that the public key hash value is incorrect, a public key obtaining failure is notified.

A manner in which the mobile phone performs verification on the public key hash value according to the public key may be: first performing a hash operation on the public key obtained from the quick response code, and then comparing a result of the operation with the received public key hash value. If the result of the operation is consistent with the received public key hash value, it indicates that the public key obtained by the mobile phone is a public key of the print device, and step 1305 is executed; or if the result of the operation is inconsistent with the received public key hash value, it indicates that the public key obtained by the mobile phone is not a public key of the print device, and the public key obtaining failure is notified.

1305. The mobile phone and the print device execute a subsequent information interaction process.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, according to an inter-device discovery method and apparatus provided in a third aspect of the embodiments of the present invention, in the present invention, a first device first obtains a public key of a second device, and after generating a public key hash value, sends the public key hash value to the second device; after verifying, according to a public key of the second device, that the public key hash value is correct, the second device returns response information to the first device; and the first device communicates with the second device after receiving the first response message. In this way, the first device sends the second device the public key hash value generated according to the obtained public key of the second device, and communicates with the second device only after receiving the response information returned by the second device after the second device verifies, according to the public key, that the public key hash value is correct. Therefore, a failure that is caused in the subsequent configuration process because the first device obtains an incorrect public key of the second device is avoided.

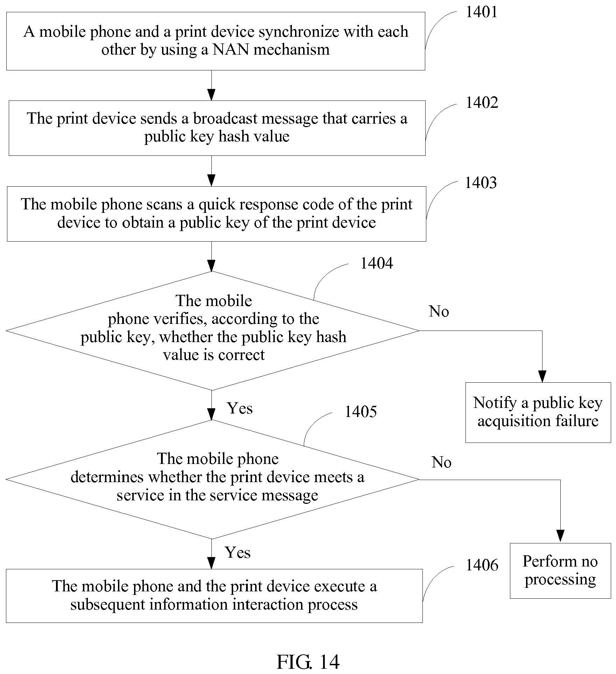

Another embodiment of the present invention provides an inter-device discovery method. The method is applied to a Wi-Fi device. A discovery process of a mobile phone and a print device is used as an example. As shown in FIG. 14, the method includes the following steps:
1401. The mobile phone and the print device synchronize with each other by using a NAN mechanism.
1402. The print device sends a broadcast message that carries a public key hash value.

The broadcast message carries a MAC address of the print device and a service supported by the print device.

1403. The mobile phone scans a quick response code of the print device to obtain a public key of the print device.

The mobile phone obtains the public key of the print device in the quick response code by scanning the quick response code of the print device.

1404. The mobile phone verifies, according to the public key, whether the public key hash value is correct, where if the mobile phone verifies that the public key hash value is correct, step 1405 is executed, or if the mobile phone verifies that the public key hash value is incorrect, a public key obtaining failure is notified.

1405. The mobile phone determines whether the print device meets a service in the service message, where if the print device meets the service in the service message, step 1406 is executed, or if the print device does not meet the service in the service message, no processing is performed.

1406. The mobile phone and the print device execute a subsequent information interaction process.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, according to an inter-device discovery method and apparatus provided in a third aspect of the embodiments of the present invention, in the present invention, a first device first obtains a public key of a second device, and after generating a public key hash value, sends the public key hash value to the second device; after verifying, according to a public key of the second device, that the public key hash value is correct, the second device returns response information to the first device; and the first device communicates with the second device after receiving the first response message. In this way, the first device sends the second device the public key hash value generated according to the obtained public key of the second device, and communicates with the second device only after receiving the response information returned by the second device after the second device verifies, according to the public key, that the public key hash value is correct. Therefore, a failure that is caused in the subsequent configuration process because the first device obtains an incorrect public key of the second device is avoided.

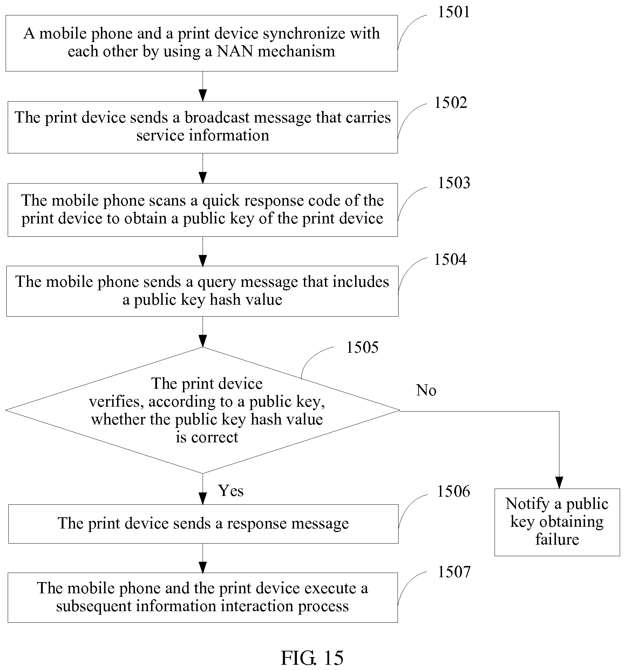

Another embodiment of the present invention provides an inter-device discovery method. The method is applied to a Wi-Fi device. A discovery process of a mobile phone and a print device is used as an example, and the mobile phone and the print device do not need to execute a service discovery process. As shown in FIG. 15, the method includes the following steps:
1501. The mobile phone and the print device synchronize with each other by using a NAN mechanism.
1502. The print device sends a broadcast message that carries service information.

The broadcast message carries a MAC address of the print device.

1503. The mobile phone scans a quick response code of the print device to obtain a public key of the print device.

The mobile phone obtains the public key of the print device in the quick response code by scanning the quick response code of the print device.

1504. The mobile phone sends a query message that includes a public key hash value.

The mobile phone may send the query message in a broadcast manner or directly send the query message to the device (the print device) that broadcasts the service information.

1505. The print device verifies, according to a public key, whether the public key hash value is correct, where if the print device verifies that the public key hash value is correct, step 1506 is executed, or if the print device verifies that the public key hash value is incorrect, a public key obtaining failure is notified.

1506. The print device sends a response message.

1507. The mobile phone and the print device execute a subsequent information interaction process.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, according to an inter-device discovery method and apparatus provided in a fourth aspect of the embodiments of the present invention, in the present invention, a first device first receives a public key hash value of a second device that is sent by the second device, then obtains a public key of the second device, and verifies, according to the public key, whether the public key hash value is correct; and the first device communicates with the second device when verifying that the public key hash value is correct. In this way, the first device communicates with the second device only after verifying, according to the obtained public key of the second device, that the received public key hash value is correct. Therefore, a failure that is caused in the subsequent configuration process because the first device obtains an incorrect public key of the second device is avoided.

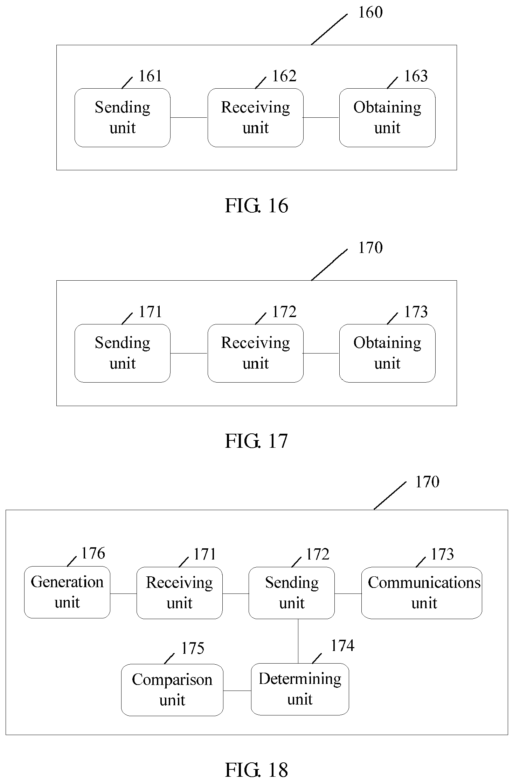

Another embodiment of the present invention provides an inter-device discovery apparatus 160. As shown in FIG. 16, the apparatus 160 includes:
a sending unit 161, configured to send a service query request message to a second device, where the service query request message includes service information that the first device needs to query, so that the second device determines, according to the service information, whether to respond to the service query request message;
a receiving unit 162, configured to receive a service query response message, where the service query response message is sent by the second device after the second device determines to respond to the service query request message, and the service query response message includes a public key derivative value of the second device; and
an obtaining unit 163, configured to obtain public key matching information; where
the sending unit 161 is further configured to: after the first device verifies that the public key matching information matches the public key derivative value, send communication information to the second device to communicate with the second device.

Further, the sending unit 161 is specifically configured to send the service query request message to target devices in a broadcast manner, where the target devices include the second device and at least one third device, and the service query request message includes the service information that the first device needs to query, so that the target devices determine, according to the service information, whether to respond to the service query request message; and
the receiving unit 162 is further configured to receive a service query response message sent by the at least one third device, where the service query response message sent by the at least one third device is sent after the at least one third device determines to respond to the service query request message, and the service query response message sent by the at least one third device includes a public key derivative value of the at least one third device.

Further, the obtaining unit 164 is further configured to obtain the service information.

The service information includes a service name or a service name derivative value. The service query response message includes an authentication manner supported by the second device and/or a device type and role of the second device.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a first device sends a second device a service query request message that includes service information that the first device needs to query; after determining, according to the service information, to respond to the service query request message, the second device sends a service query response message that includes a public key derivative value of the second device; after receiving the service query response message, the first device obtains public key matching information, and matches the public key matching information with the public key derivative value; and the first device communicates with the second device after the first device verifies that the public key matching information matches the public key derivative value. In this way, after determining to respond to the service query request message of the first device, the second device sends the public key derivative value of the second device to the first device, the first device verifies whether the public key derivative value of the second device matches the obtained public key matching information, and the first device communicates with the second device only after the two match each other. Therefore, a success in subsequent configuration of the first device and the second device is ensured, and a failure that is caused in the subsequent configuration process because the first device obtains an incorrect public key of the second device is avoided.

Another embodiment of the present invention provides an inter-device discovery apparatus 170. As shown in FIG. 17, the apparatus 170 includes:
a receiving unit 171, configured to receive a service query request message sent by a second device, where the service query request message includes service information that the second device needs to query;
a sending unit 172, configured to send a service query response message to the second device when the first device determines to respond to the service query request message, where the service query response message includes a public key derivative value of the first device, so that the second device verifies whether obtained public key matching information is consistent with the public key derivative value; and
a communications unit 173, configured to communicate with the second device when the first device receives communication information sent by the second device.

Further, as shown in FIG. 18, the apparatus 170 further includes:
a comparison unit 174, configured to determine whether a service that can be provided by the first device is consistent with the service information; and
a determining unit 175, configured to: when the service that can be provided by the first device is consistent with the service information, determine to respond to the service query request message.

Further, as shown in FIG. 18, the apparatus 170 further includes:
a generation unit 176, configured to generate the public key derivative value according to a public key of the first device.

The public key derivative value is a public key hash value. The service information includes a service name or a service name derivative value. The service query response message includes an authentication manner supported by the first device and/or a device type and role of the first device.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a second device sends a first device a service query request message that includes service information that the second device needs to query; after determining, according to the service information, to respond to the service query request message, the first device sends a service query response message that includes a public key derivative value of the first device; after receiving the service query response message, the second device obtains public key matching information, and matches the public key matching information with the public key derivative value; and the second device communicates with the first device after the second device verifies that the public key matching information matches the public key derivative value. In this way, after determining to respond to the service query request message of the second device, the first device sends the public key derivative value of the first device to the second device, the second device verifies whether the public key derivative value of the first device matches the obtained public key matching information, and the second device communicates with the first device only after the two match each other. Therefore, a success in subsequent configuration of the first device and the second device is ensured, and a failure that is caused in the subsequent configuration process because the first device obtains an incorrect public key of the first device is avoided.

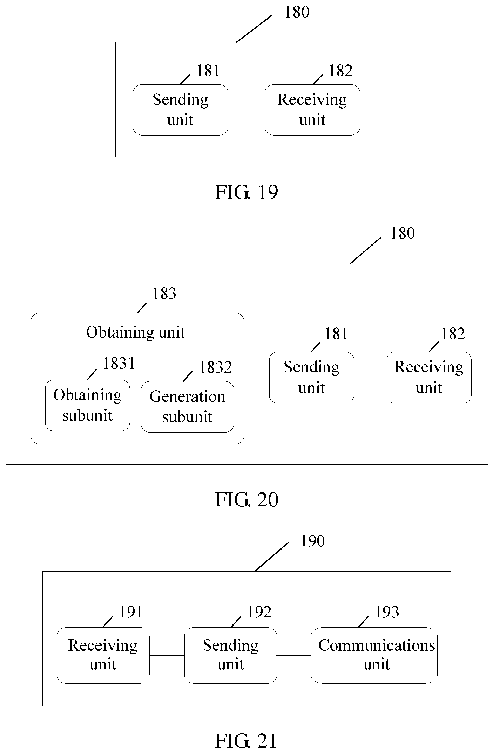

Another embodiment of the present invention provides an inter-device discovery apparatus 180. As shown in FIG. 19, the apparatus 180 includes:
a sending unit 181, configured to send a service query request message to a second device, where the service query request message includes service information that the first device needs to query and a public key derivative value of the second device, so that the second device determines, according to the service information and the public key derivative value, whether to respond to the service query request message; and
a receiving unit 182, configured to receive a service query response message, where the service query response message is sent by the second device after the second device determines to respond to the service query request message; where
the sending unit 181 is further configured to send communication information to the second device to communicate with the second device.

Further, the sending unit 181 is specifically configured to send the service query request message to target devices in a broadcast manner, where the target devices include the second device and at least one third device, and the service query request message includes the service information that the first device needs to query and the public key derivative value of the second device, so that the target devices determine, according to the service information and the public key derivative value, whether to respond to the service query request message.

Further, as depicted in FIG. 20, the apparatus 180 further includes:
an obtaining unit 183, configured to obtain the service information and the public key derivative value of the second device.

Further, as depicted in FIG. 20, the obtaining unit 183 includes:
an obtaining subunit 1831, configured to obtain a public key of the second device; and
a generation subunit 1832, configured to generate the public key derivative value of the second device according to the public key.

The public key derivative value is a public key hash value. The service information includes a service name or a service name derivative value. The service query response message includes an authentication manner supported by the first device and/or a device type and role of the first device.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a first device sends a second device a service query request message that includes an obtained public key derivative value of the second device and obtained service information; after determining, according to the service information and the public key derivative value, to respond to the service query request message, the second device sends a service query response message to the first device; and the first device communicates with the second device after receiving the service query response message. In this way, the first device sends the public key derivative value of the second device to the second device, the second device determines, according to the public key derivative value of the second device, to respond to the first device, and then the first device communicates with the second device. Therefore, a failure that is caused in the subsequent configuration process because the first device obtains an incorrect public key of the second device is avoided.

Another embodiment of the present invention provides an inter-device discovery apparatus 190. As shown in FIG. 21, the apparatus 190 includes:
a receiving unit 191, configured to receive a service query request message sent by a second device, where the service query request message includes service information that the second device needs to query and a public key derivative value of the first device;
a sending unit 192, configured to send a service query response message to the second device when the first device determines, according to the service information and the public key derivative value, to respond to the service query request message; and
a communications unit 193, configured to communicate with the second device when the first device receives communication information sent by the second device.

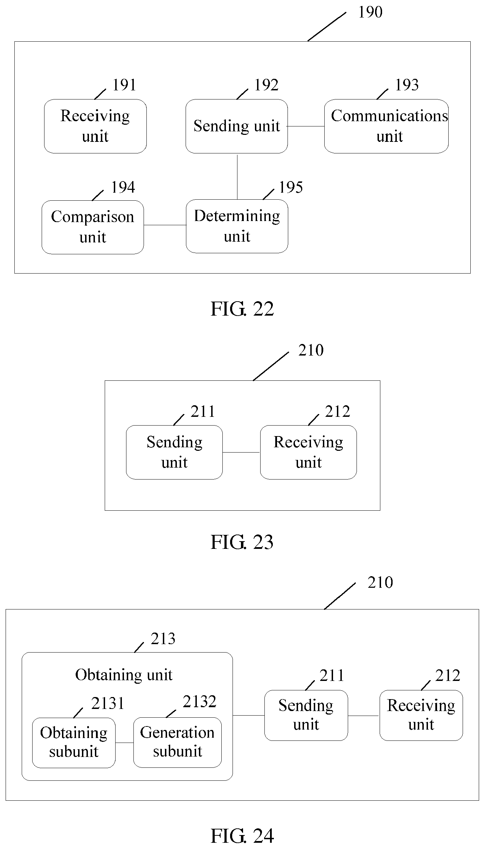

Further, as shown in FIG. 22, the apparatus 190 further includes:
a comparison unit 194, configured to determine whether a service that can be provided by the first device is consistent with the service information; where
the comparison unit 194 is further configured to determine whether the public key derivative value matches a public key of the first device; and
a determining unit 195, configured to: when the service that can be provided by the first device is consistent with the service information, and the public key derivative value matches the public key of the first device, determine to respond to the service query request message.

The public key derivative value is the public key hash value. The service information includes a service name or a service name derivative value. The service query response message includes an authentication manner supported by the first device and/or a device type and role of the first device.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a second device sends a first device a service query request message that includes an obtained public key derivative value of the first device and obtained service information; the first device sends a service query response message to the second device after determining, according to the service information and the public key derivative value, to respond to the service query request message; and the second device communicates with the first device after receiving the service query response message. In this way, the second device sends the public key derivative value of the first device to the first device, the first device determines, according to the public key derivative value of the first device, to respond to the second device, and then the second device communicates with the first device. Therefore, a failure that is caused in the subsequent configuration process because the second device obtains an incorrect public key of the first device is avoided.

Another embodiment of the present invention provides an inter-device discovery apparatus 210. As shown in FIG. 23, the apparatus 210 includes:
a sending unit 211, configured to send a public key derivative value of a second device to the second device, so that the second device determines, according to the public key derivative value, whether to return a response message to the first device; and
a receiving unit 212, configured to receive a response message sent by the second device, where the response message is sent by the second device after the second device determines to return a response message to the first device; where
the sending unit 211 is further configured to send communication information to the second device to communicate with the second device.

Further, the sending unit 211 is further configured to send a service query request message to the second device, where the service query request message includes service information that the first device needs to query, so that the second device determines, according to the service information, whether to respond to the service query request message; and
the receiving unit 212 is further configured to receive a service query response message sent by the second device, where the service query response message is sent by the second device after the second device determines to respond to the service query request message.

Further, the sending unit 211 is specifically configured to send the public key derivative value to target devices in a broadcast manner, so that the target devices determine, according to the public key derivative value, whether to return a response message to the first device, where the target devices include the second device and at least one third device.

Further, as shown in FIG. 24, the apparatus 210 further includes:
an obtaining unit 213, configured to obtain the service information.

Further, the obtaining unit 213 is further configured to obtain the public key derivative value of the second device.

Further, as shown in FIG. 24, the obtaining unit 213 includes:
an obtaining subunit 2131, configured to obtain a public key of the second device; and
a generation subunit 2132, configured to generate the public key derivative value of the second device according to the public key.

The public key derivative value is a public key hash value. The service information includes a service name or a service name derivative value. The service query response message includes an authentication manner supported by the first device and/or a device type and role of the first device.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a first device sends a public key derivative value of a second device to the second device; the second device sends a response message to the first device after determining, according to the public key derivative value, to return a response message to the first device; and the first device communicates with the second device after the first device receives the response message sent by the second device. In this way, the first device sends the public key derivative value of the second device to the second device, and the first device communicates with the second device only after the second device performs determining according to the public key derivative value. Therefore, a failure that is caused in the subsequent configuration process because the first device obtains an incorrect public key of the second device is avoided.

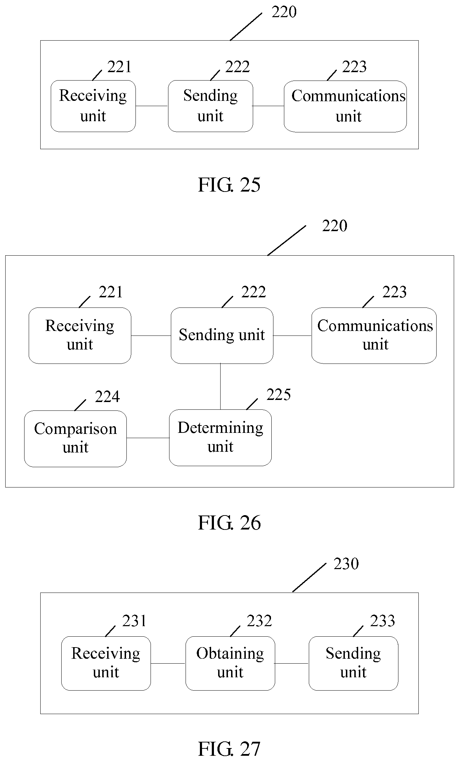

Another embodiment of the present invention provides an inter-device discovery apparatus 220. As shown in FIG. 25, the apparatus 220 includes:
a receiving unit 221, configured to receive a public key derivative value of a second device that is sent by the second device;
a sending unit 222, configured to send a response message to the second device when the first device determines, according to the public key derivative value, to return response information to the second device; and
a communications unit 223, configured to communicate with the second device when the first device receives communication information sent by the second device.

Further, as depicted in FIG. 26, the apparatus 220 further includes:
a comparison unit 224, configured to determine whether the public key derivative value matches a public key of the first device; and
a determining unit 225, configured to: when the public key derivative value matches the public key of the first device, determine to return response information to the second device.

Further, the receiving unit 221 is further configured to receive a service query request message sent by the second device, where the service query request message includes service information that the second device needs to query; and
the sending unit 222 is further configured to send a service query response message to the second device when the first device determines, according to the service information, to respond to the service query request message.

Further, the comparison unit 224 is further configured to determine whether a service that can be provided by the first device is consistent with the service information; and
the determining unit 225 is further configured to: when the service that can be provided by the first device is consistent with the service information, determine to respond to the service query request message.

The public key derivative value is the public key hash value. The service information includes a service name or a service name derivative value. The service query response message includes an authentication manner supported by the first device and/or a device type and role of the first device.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a second device sends a public key derivative value of a first device to the first device; the first device sends a response message to the second device after determining, according to the public key derivative value, to return a response message to the second device; and the second device communicates with the first device after the second device receives the response message sent by the first device. In this way, the second device sends the public key derivative value of the first device to the first device, and the second device communicates with the first device only after the second device performs determining according to the public key derivative value. Therefore, a failure that is caused in the subsequent configuration process because the second device obtains an incorrect public key of the first device is avoided.

Another embodiment of the present invention provides an inter-device discovery apparatus 230. As shown in FIG. 27, the apparatus 230 includes:
a receiving unit 231, configured to receive a public key derivative value of a second device that is sent by the second device;
an obtaining unit 232, configured to obtain public key matching information; and
a sending unit 233, configured to: after the first device verifies that the public key matching information matches the public key derivative value, send communication information to the second device to communicate with the second device.

The public key derivative value is a public key hash value.

Further, the receiving unit 231 is further configured to receive a service query request message sent by the second device, where the service query request message includes service information that can be provided by the second device; and
the sending unit 233 is further configured to: after it is verified that the public key matching information matches the public key derivative value and whether a service that the first device needs to query matches the service information, send the communication information to the second device to communicate with the second device.

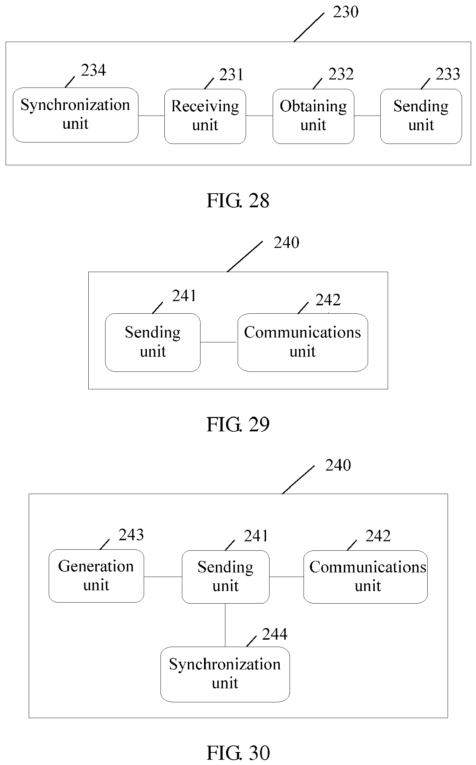

Further, as depicted in FIG. 28, the apparatus 230 further includes:
a synchronization unit 234, configured to synchronize with the second device.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a second device sends a public key derivative value of the second device to a first device; after obtaining public key matching information, the first device verifies whether the public key matching information matches the public key derivative value; and the first device communicates with the second device after the two match each other. In this way, the first device communicates with the second device only after verifying whether the obtained public key matching information matches the public key derivative value. Therefore, a failure that is caused in the subsequent configuration process because the first device obtains an incorrect public key of the second device is avoided.

Another embodiment of the present invention provides an inter-device discovery apparatus 240. As shown in FIG. 29, the apparatus 240 includes:
a sending unit 241, configured to send a public key derivative value of the first device to a second device, so that the second device verifies whether the public key derivative value matches public key matching information obtained by the second device; and
a communications unit 242, configured to communicate with the second device when the first device receives communication information sent by the second device.

The public key derivative value is a public key hash value.

Further, the sending unit 241 is further configured to send a service query request message to the second device, where the service query request message is service information that can be provided by the first device, so that the second device determines whether the service information is consistent with a service that the first device needs to query.

Further, as depicted in FIG. 30, the apparatus 240 further includes:
a generation unit 243, configured to generate the public key derivative value according to a public key of the first device.

Further, as depicted in FIG. 30, the apparatus 240 further includes:
a synchronization unit 244, configured to synchronize with the second device.

In the prior art, after a target device is selected, a user uses a mobile phone to scan a quick response code, but because the user is unfamiliar with names of devices in most cases, the mobile phone is highly prone to obtain a quick response code of another device by means of scanning. Consequently, the quick response code obtained by the mobile phone does not match the selected target device, and further, a subsequent configuration process fails. Compared with the prior art, in the present invention, a first device sends a public key derivative value of the first device to a second device; after obtaining public key matching information, the second device verifies whether the public key matching information matches the public key derivative value; and the second device communicates with the first device after the two match each other. In this way, the second device communicates with the first device only after verifying whether the obtained public key matching information matches the public key derivative value. Therefore, a failure that is caused in the subsequent configuration process because the second device obtains an incorrect public key of the first device is avoided.

The inter-device discovery apparatus provided in the embodiments of the present invention can implement the foregoing provided method embodiments. For specific function implementation, refer to descriptions in the method embodiments. Details are not described herein. The inter-device discovery method and apparatus provided in the embodiments of the present invention may be applicable to but not only to a wireless communications device such as a Wi-Fi or Bluetooth device.

The embodiments in this specification are all described in a progressive manner, for same or similar parts in the embodiments, reference may be made to these embodiments, and each embodiment focuses on a difference from other embodiments. Especially, a device embodiment is basically similar to a method embodiment, and therefore is described briefly; for related parts, reference may be made to partial descriptions in the method embodiment.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An inter-device discovery method, comprising:
obtaining, by a first device, a public key of the second device;
generating, by the first device, a public key derivative value of the second device according to the public key; and
sending, by the first device, the public key derivative value of the second device to the second device, so that the second device verifies whether the received public key derivative value of the second device is correct; and after receiving a response message sent by the second device, sending, by the first device, communication information to the second device to communicate with the second device, wherein the response message is sent by the second device to the first device after the second device verifies that the received public key derivative value of the second device is correct; or
receiving, by the first device, a public key derivative value of the second device that is sent by the second device; verifying whether the received public key derivative value of the second device is correct; if the received public key derivative value of the second device is correct, sending, by the first device, a response message to the second device; and communicating, by the first device, with the second device after receiving communication information sent by the second device, wherein the communication information is sent by the second device to the first device after the second device receives the response message; wherein
the public key derivative value is a static or dynamic value, and the public key derivative value of the second device is a hash value generated based on the public key of the second device, a hash value generated based on the public key of the second device and agreed plaintext information, a truncated value of the public key of the second device, or a truncated value of a hash value generated based on the public key of the second device.

2. An inter-device discovery method, comprising:
receiving, by a second device, a public key derivative value of the second device that is sent by a first device after the first device obtains a public key of the second device and generates the public key derivative value of the second device according to the public key; verifying, by the second device, whether the received public key derivative value of the second device is correct; after verifying that the received public key derivative value of the second device is correct, sending, by the second device, a response message to the first device; receiving, by the second device, communication information sent by the first device to the second device after the first device receives the response message sent by the second device, to communicate with the first device; or
sending, by a second device, a public key derivative value of the second device to a first device, so that after obtaining a public key of the second device and generating a public key derivative value of the second device according to the public key, the first device verifies whether the received public key derivative value of the second device is correct; receiving, by the second device, a response message sent by the first device to the second device after the first device verifies that the received public key derivative value of the second device is correct; and sending, by the second device after receiving the response message, communication information to the first device to communicate with the first device; wherein
the public key derivative value is a static or dynamic value, and the public key derivative value of the second device is a hash value generated based on the public key of the second device, a hash value generated based on the public key of the second device and agreed plaintext information, a truncated value of the public key of the second device, or a truncated value of a hash value generated based on the public key of the second device.

3. An inter-device discovery apparatus, wherein the apparatus is a first device and comprises:
an obtaining unit, configured to: obtain a public key of the second device, and generate a public key derivative value of the second device according to the public key;
a first sending unit, configured to send the public key derivative value of the second device to the second device, so that the second device verifies whether the received public key derivative value of the second device is correct; and a first receiving unit, configured to receive a response message sent by the second device, wherein the first sending unit is further configured to: after the first receiving unit receives the response message, send communication information to the second device to communicate with the second device, and the response message is sent by the second device to the first device after the second device verifies that the received public key derivative value of the second device is correct; or
a second receiving unit, configured to receive a public key derivative value of the second device that is sent by the second device; a verification unit, configured to verify whether the received public key derivative value of the second device is correct; and a second sending unit, configured to send a response message to the second device when the verification unit verifies that the received public key derivative value of the second device is correct, wherein the second receiving unit is further configured to communicate with the second device after receiving communication information sent by the second device, and the communication information is sent by the second device to the first device after the second device receives the response message; wherein
the public key derivative value is a static or dynamic value, and the public key derivative value of the second device is a hash value generated based on the public key of the second device, a hash value generated based on the public key of the second device and agreed plaintext information, a truncated value of the public key of the second device, or a truncated value of a hash value generated based on the public key of the second device.

4. An inter-device discovery apparatus, wherein the apparatus is a second device and comprises:
a first receiving unit, configured to receive a public key derivative value of the second device that is sent by a first device after the first device obtains a public key of the second device and generates the public key derivative value of the second device; a verification unit, configured to verify whether the received public key derivative value of the second device is correct; and a first sending unit, configured to send a response message to the first device after the verification unit verifies that the received public key derivative value of the second device is correct, wherein the first receiving unit is further configured to receive communication information sent by the first device to the second device after the first device receives the response message sent by the second device, to communicate with the first device; or
a second sending unit, configured to send a public key derivative value of the second device to a first device, so that after obtaining a public key of the second device and generating a public key derivative value of the second device according to the public key, the first device verifies whether the received public key derivative value of the second device is correct; and a second receiving unit, configured to receive a response message sent by the first device to the second device after the first device verifies that the received public key derivative value of the second device is correct, wherein the second sending unit is further configured to: after the second receiving unit receives the response message, send communication information to the first device to communicate with the first device; wherein
the public key derivative value is a static or dynamic value, and the public key derivative value of the second device is a hash value generated based on the public key of the second device, a hash value generated based on the public key of the second device and agreed plaintext information, a truncated value of the public key of the second device, or a truncated value of a hash value generated based on the public key of the second device.

5. An inter-device discovery method, comprising:
sending, by a first device, a service query request message to a second device, wherein the service query request message comprises service information that the first device needs to query, so that the second device determines, according to the service information, whether to respond to the service query request message;
receiving, by the first device, a service query response message, wherein the service query response message is sent by the second device after the second device determines to respond to the service query request message;
receiving, by the first device, a public key derivative value of the second device that is sent by the second device;
obtaining, by the first device, public key matching information; and
sending, by the first device after receiving the service query response message and verifying that the public key matching information matches the public key derivative value of the second device, communication information to the second device to communicate with the second device.

6. The method according to claim 5, wherein the public key derivative value of the second device that is sent by the second device is specifically carried in the service query response message.

7. The method according to claim 5, wherein the first device specifically sends the service query request message to the second device after receiving the public key derivative value of the second device that is sent by the second device and verifying that the public key matching information matches the public key derivative value of the second device.

8. The method according to any one of claims 5 to 7, wherein the public key derivative value is a static or dynamic value, and
the public key derivative value of the second device is a hash value generated based on a public key of the second device, a hash value generated based on a public key of the second device and agreed plaintext information, a truncated value of a public key of the second device, or a truncated value of a hash value generated based on a public key of the second device.

9. An inter-device discovery method, comprising:
sending, by a first device, a service query request message to a second device, wherein the service query request message comprises service information that the first device needs to query, so that the second device determines, according to the service information, whether to respond to the service query request message;
receiving, by the first device, a service query response message, wherein the service query response message is sent by the second device after the second device determines to respond to the service query request message;
sending, by the first device, a public key derivative value of the second device to the second device, so that the second device performs verification on the received public key derivative value of the second device; and
after the service query response message is received, and the public key derivative value of the second device is verified, sending, by the first device, communication information to the second device to communicate with the second device.

10. The method according to claim 9, wherein the public key derivative value of the second device that is sent by the first device is specifically carried in the service query request message.

11. The method according to claim 9, wherein the first device specifically sends the service query request message to the second device after the public key derivative value of the second device is sent to the second device and the public key derivative value of the second device is verified.

12. An inter-device discovery method, comprising:
receiving, by a first device, a public key derivative value of a second device that is sent by the second device;
obtaining, by the first device, public key matching information;
receiving, by the first device, a service query request message sent by the second device, wherein the service query request message comprises service information that can be provided by the second device; and
after verifying that the public key matching information matches the public key derivative value of the second device and a service that the first device needs to query matches the service information that can be provided by the second device, sending, by the first device, communication information to the second device to communicate with the second device.

13. The method according to claim 12, wherein the public key derivative value of the second device that is sent by the second device is specifically carried in the service query request message sent by the second device.

14. An inter-device discovery apparatus, wherein the apparatus is a first device and comprises:
a sending unit, configured to send a service query request message to a second device, wherein the service query request message comprises service information that the first device needs to query, so that the second device determines, according to the service information, whether to respond to the service query request message;
a receiving unit, configured to receive a service query response message, wherein the service query response message is sent by the second device after the second device determines to respond to the service query request message; wherein
the receiving unit is further configured to receive a public key derivative value of the second device that is sent by the second device; and
an obtaining unit, configured to obtain public key matching information; wherein
the sending unit is further configured to: after the receiving unit receives the service query response message and the first device verifies that the public key matching information matches the public key derivative value of the second device, send communication information to the second device to communicate with the second device.

15. An inter-device discovery apparatus, wherein the apparatus is a first device and comprises:
a sending unit, configured to send a service query request message to a second device, wherein the service query request message comprises service information that the first device needs to query, so that the second device determines, according to the service information, whether to respond to the service query request message; and
a receiving unit, configured to receive a service query response message, wherein the service query response message is sent by the second device after the second device determines to respond to the service query request message; wherein
the sending unit is further configured to send a public key derivative value of the second device to the second device, so that the second device performs verification on the received public key derivative value of the second device; and
the sending unit is further configured to: after the receiving unit receives the service query response message and the public key derivative value of the second device is verified, send communication information to the second device to communicate with the second device.

16. An inter-device discovery apparatus, wherein the apparatus is a first device and comprises:
a receiving unit, configured to receive a public key derivative value of a second device that is sent by the second device;
an obtaining unit, configured to obtain public key matching information; wherein
the receiving unit is further configured to receive a service query request message sent by the second device, wherein the service query request message comprises service information that can be provided by the second device; and
a sending unit, configured to: after the first device verifies that the public key matching information matches the public key derivative value and a service that the first device needs to query matches the service information that can be provided by the second device, send communication information to the second device to communicate with the second device.

17. An inter-device discovery method, comprising:
receiving, by a second device, a service query request message sent by a first device, wherein the service query request message comprises service information that the first device needs to query, so that the second device determines, according to the service information, whether to respond to the service query request message;
after determining to respond to the service query request message, sending, by the second device, a service query response message to the first device;
sending, by the second device, a public key derivative value of the second device to the first device, so that after obtaining public key matching information, the first device verifies whether the public key matching information matches the public key derivative value of the second device; and
communicating, by the second device, with the second device after receiving communication information sent by the first device, wherein the communication information is sent by the first device to the second device after the first device receives the service query response message and verifies that the public key matching information matches the public key derivative value of the second device.

18. An inter-device discovery method, comprising:
receiving, by a second device, a service query request message sent by a first device, wherein the service query request message comprises service information that the first device needs to query;
after determining, according to the service information, to respond to the service query request message, sending, by the second device, a service query response message to the first device;
receiving, by the second device, a public key derivative value of the second device that is sent by the first device;
performing, by the second device, verification on the received public key derivative value of the second device; and
receiving, by the second device, communication information sent by the first device to the second device after the service query response message is received and the public key derivative value of the second device is verified, to communicate with the first device.

19. An inter-device discovery method, comprising:
sending, by a second device, a public key derivative value of the second device to a first device, so that the first device obtains public key matching information, and verifies whether the public key matching information matches the public key derivative value of the second device;
sending, by the second device, a service query request message to the first device, wherein the service query request message comprises service information that can be provided by the second device; and
receiving, by the second device, communication information sent by the first device to the second device after the first device verifies that the public key matching information matches the public key derivative value of the second device and that a service that the first device needs to query matches the service information that can be provided by the second device, to communicate with the first device.

20. An inter-device discovery apparatus, wherein the apparatus is a second device and comprises:
a receiving unit, configured to receive a service query request message sent by a first device, wherein the service query request message comprises service information that the first device needs to query, so that the second device determines, according to the service information, whether to respond to the service query request message; and
a sending unit, configured to send a service query response message to the first device after the second device determines to respond to the service query request message; wherein
the sending unit is further configured to send a public key derivative value of the second device to the first device, so that after obtaining public key matching information, the first device verifies whether the public key matching information matches the public key derivative value of the second device; and
the receiving unit is further configured to communicate with the second device after receiving communication information sent by the first device, wherein the communication information is sent by the first device to the second device after the first device receives the service query response message and verifies that the public key matching information matches the public key derivative value of the second device.

21. An inter-device discovery apparatus, wherein the apparatus is a second device and comprises:
a receiving unit, configured to receive a service query request message sent by a first device, wherein the service query request message comprises service information that the first device needs to query;
a sending unit, configured to: after the second device determines, according to the service information, to respond to the service query request message, send a service query response message to the first device; wherein
the receiving unit is further configured to receive a public key derivative value of the second device that is sent by the first device; and
a verification unit, configured to perform verification on the received public key derivative value of the second device; wherein
the receiving unit is further configured to receive communication information sent by the first device to the second device after the service query response message is received and the public key derivative value of the second device is verified, to communicate with the first device.

22. An inter-device discovery apparatus, wherein the apparatus is a second device and comprises:
a sending unit, configured to send a public key derivative value of the second device to a first device, so that the first device obtains public key matching information, and verifies whether the public key matching information matches the public key derivative value of the second device; wherein
the sending unit is further configured to send a service query request message to the first device, wherein the service query request message comprises service information that can be provided by the second device; and
a receiving unit, configured to receive communication information sent by the first device to the second device after the first device verifies that the public key matching information matches the public key derivative value of the second device and that a service that the first device needs to query matches the service information that can be provided by the second device, to communicate with the first device.
